(19) Europäisches Patentamt
European Patent Office
Office européen des brevets

(11) EP 4 404 320 A1

(12) EUROPEAN PATENT APPLICATION
published in accordance with Art. 153(4) EPC

(43) Date of publication:
**24.07.2024 Bulletin 2024/30**

(21) Application number: **22869058.2**

(22) Date of filing: **05.09.2022**

(51) International Patent Classification (IPC):
***H01M 10/0567*** (2010.01) ***H01M 10/0525*** (2010.01)

(52) Cooperative Patent Classification (CPC):
Y02E 60/10

(86) International application number:
**PCT/CN2022/117004**

(87) International publication number:
**WO 2023/040687 (23.03.2023 Gazette 2023/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.09.2021 CN 202111087759**

(71) Applicant: **Ningde Amperex Technology Limited**
**Zhangwan Town, Jiaocheng District**
**Ningde City**
**Fujian 352100 (CN)**

(72) Inventors:
- **XU, Chunrui**
**Ningde City, Fujian 352100 (CN)**
- **XU, Yanyan**
**Ningde City, Fujian 352100 (CN)**
- **ZHENG, Jianming**
**Ningde City, Fujian 352100 (CN)**
- **TANG, Chao**
**Ningde City, Fujian 352100 (CN)**

(74) Representative: **Klunker IP Patentanwälte PartG mbB**
**Destouchesstraße 68**
**80796 München (DE)**

# (54) ELECTROLYTE, ELECTROCHEMICAL DEVICE COMPRISING SAME, AND ELECTRONIC DEVICE

(57) This application provides an electrolytic solution, an electrochemical device containing the electrolytic solution, and an electronic device. The electrolytic solution includes ethylene carbonate, propylene carbonate, and fluoroethylene carbonate. Based on a mass of the electrolytic solution, a mass percent of the ethylene carbonate is a, a mass percent b of the propylene carbonate is 12% to 35%, a mass percent c of the fluoroethylene carbonate is 0.2% to 2.5%, and the electrolytic solution satisfies $0.1 \leq a/b \leq 0.75$. The electrochemical device containing the electrolytic solution according to this application achieves excellent high-temperature storage performance and cycle performance.

## Description

This application claims priority to Chinese Patent Application No. 202111087759.4, filed with the Chinese Patent Office on September 16, 2021 and entitled "ELECTROLYTIC SOLUTION, ELECTROCHEMICAL DEVICE CONTAINING SAME, AND ELECTRONIC DEVICE", which is incorporated herein by reference in its entirety.

## TECHNICAL FIELD

This application relates to the technical field of electrochemistry, and in particular, to an electrolytic solution, an electrochemical device containing the electrolytic solution, and an electronic device.

## BACKGROUND

By virtue of the advantages of a high energy storage density, a high open circuit voltage, a low self-discharge rate, a long cycle life, and high safety, lithium-ion batteries are widely used in various fields such as portable electric energy storage, electronic devices, and electric vehicles. However, this imposes higher requirements on comprehensive performance of the lithium-ion batteries. For example, a lithium-ion battery is required to concurrently achieve a high energy density, good high-temperature storage performance and cycle performance, and the like. Nevertheless, the high energy density is accompanied by a decline in the high-temperature storage performance and cycle performance.

In the related art, the high-temperature storage performance and cycle performance of the lithium-ion battery are usually improved by using an electrolytic solution additive. Most additives improve the high-temperature storage by forming a film on a positive electrode. However, the formed film tends to severely deteriorate the low-temperature discharge performance and cycle performance of the lithium-ion battery due to excessive viscosity or excessive resistance of the formed film. Some additives with a relatively low film resistance are usually prone to deteriorate the high-temperature storage performance of the lithium-ion battery. Therefore, it is urgent to develop an electrolytic solution that can effectively improve the high-temperature storage performance of the lithium-ion battery.

## SUMMARY

An objective of this application is to provide an electrolytic solution, an electrochemical device containing the electrolytic solution, and an electronic device to improve high-temperature storage performance of the electrochemical device.

A first aspect of this application provides an electrolytic solution. The electrolytic solution includes ethylene carbonate, propylene carbonate, and fluoroethylene carbonate. Based on a mass of the electrolytic solution, a mass percent of the ethylene carbonate is a, a mass percent b of the propylene carbonate is 12% to 35%, a mass percent c of the fluoroethylene carbonate is 0.2% to 2.5%, and the electrolytic solution satisfies $0.1 \le a/b \le 0.75$. Without being limited to any theory, the electrolytic solution improves the high-temperature storage performance and cycle performance of the electrochemical device by controlling the mass percent b of the propylene carbonate to be 12% to 35%, controlling the mass percent c of the fluoroethylene carbonate to be 0.2% to 2.5%, and controlling the mass ratio a/b between the ethylene carbonate and the propylene carbonate to be 0.1 to 0.75.

In an embodiment of this application, $1.0\% \le a \le 20\%$. By controlling the mass percent a of the ethylene carbonate to fall within the range specified above, the electrolytic solution improves the cycle performance and capacity retention rate of the electrochemical device and reduces the volume expansion rate of the electrochemical device. In an embodiment of this application, the electrolytic solution may further include a chain carbonate. Based on the mass of the electrolytic solution, a mass percent of the chain carbonate is d. The chain carbonate includes at least one of dimethyl carbonate, ethyl methyl carbonate, methyl propyl carbonate, methyl isopropyl carbonate, methyl butyl carbonate, diethyl carbonate, dipropyl carbonate, or dibutyl carbonate. The electrolytic solution satisfies $0.04 \le a/d \le 0.35$. By controlling the value of the aid ratio to fall within the range specified above, the electrolytic solution facilitates formation of synergy between the ethylene carbonate and the chain carbonate, and improves the cycle performance and high-temperature storage performance of the electrochemical device under a high voltage.

In an embodiment of this application, $30\% \le d \le 60\%$. By controlling the mass percent of the chain carbonate to fall within the range specified above, the electrolytic solution improves the comprehensive performance such as cycle performance and rate performance of the electrochemical device under a high voltage.

In an embodiment of this application, the electrolytic solution may further include a sultone compound. The sultone compound includes at least one of 1,3-propane sultone, 2,4-butane sultone, or 1,4-butane sultone. Based on the mass of the electrolytic solution, a mass percent e of the sultone compound is 0.5% to 5%.

In an embodiment of this application, c is less than or equal to e. By controlling the mass percent of the sultone compound to fall within the range specified above and to be greater than the mass percent of fluoroethylene carbonate,

the electrolytic solution improves the cycle performance and high-temperature storage performance of the electrochemical device, and reduces the amount of gassing during cycling. In this application, the positive electrode may mean a positive electrode plate, and the negative electrode may mean a negative electrode plate.

In an embodiment of this application, the electrolytic solution may further include an additive A. The additive A includes at least one of vinylene carbonate, vinyl ethylene carbonate, ethylene sulfate, lithium difluorophosphate, or a lithium borate salt. Without being limited to any theory, by selecting the additive A specified above, the electrolytic solution improves the cycle performance, high-temperature storage performance, and safety performance of the electrochemical device under a high voltage.

In an embodiment of this application, the electrolytic solution satisfies at least one of the following relations: (a) the additive A includes vinylene carbonate, and, based on the mass of the electrolytic solution, a mass percent A1 of the vinylene carbonate is 0.01% to 2%; (b) the additive A includes ethylene sulfate, and, based on the mass of the electrolytic solution, a mass percent A2 of the ethylene sulfate is 0.01% to 2%; (c) the additive A includes a lithium borate salt, the lithium borate salt includes at least one of lithium tetrafluoroborate, lithium difluoro(oxalato)borate, or lithium bis(oxalato)borate, and, based on the mass of the electrolytic solution, a mass percent A3 of the lithium borate salt is 0.01% to 2%; (d) the electrolytic solution includes vinylene carbonate and ethylene sulfate, and, based on the mass of the electrolytic solution, the mass percent of the vinylene carbonate is A1, the mass percent of the ethylene sulfate is A2, and the electrolytic solution satisfies $0.1 < A2/A1 \leq 12$; (e) the electrolytic solution includes vinylene carbonate and ethylene sulfate, and, based on the mass of the electrolytic solution, the mass percent of the vinylene carbonate is A1, the mass percent of the ethylene sulfate is A2, and the electrolytic solution satisfies $0.02\% \leq A1 + A2 \leq 3\%$; (f) the electrolytic solution includes vinylene carbonate and a lithium borate salt, and, based on the mass of the electrolytic solution, the mass percent of the vinylene carbonate is A1, the mass percent of the lithium borate salt is A3, and the electrolytic solution satisfies $0.01\% \leq A1 + A3 \leq 3\%$; and (g) the electrolytic solution includes vinylene carbonate and a lithium borate salt, and, based on the mass of the electrolytic solution, the mass percent of the vinylene carbonate is A1, the mass percent of the lithium borate salt is A3, and the electrolytic solution satisfies $0.1 \leq A1/A3 \leq 10$. With the electrolytic solution satisfying at least one of the relations specified above, the electrolytic solution facilitates formation of a solid electrolyte interface (SEI) film and a cathode electrolyte interface (CEI) film that are relatively stable under a high voltage, and forms high synergy between materials, thereby improving the high-temperature storage performance and cycle performance of the electrochemical device.

In an embodiment of this application, the additive A may include vinylene carbonate. Based on the mass of the electrolytic solution, a mass percent A1 of the vinylene carbonate is 0.01% to 2%.

In an embodiment of this application, the additive A may include ethylene sulfate. Based on the mass of the electrolytic solution, a mass percent A2 of the ethylene sulfate is 0.01% to 2%.

In an embodiment of this application, the additive A may include vinylene carbonate and ethylene sulfate, and satisfies $0.1 < A2/A1 \leq 12$ and/or $0.02\% \leq A1 + A2 \leq 3\%$. By controlling the mass percent of the ethylene sulfate to fall within the range specified above and satisfy $0.1 < A2/A1 \leq 12$ and/or $0.02\% \leq A1 + A2 \leq 3\%$, the electrolytic solution forms an SEI film and a CEI film that are relatively stable under a high voltage, and forms high synergy with the ethylene carbonate and the propylene carbonate, thereby improving the high-temperature storage performance and cycle performance of the electrochemical device.

In an embodiment of this application, the additive A may include a lithium borate salt. The lithium borate salt may include at least one of lithium tetrafluoroborate, lithium difluoro(oxalato)borate, or lithium bis(oxalato)borate. Based on the mass of the electrolytic solution, a mass percent A3 of the lithium borate salt is 0.01% to 2%.

In an embodiment of this application, the additive A may include vinylene carbonate and a lithium borate salt, satisfying $0.01\% \leq A1 + A3 \leq 3\%$ and/or $0.1 \leq A1/A3 \leq 10$. When the lithium borate salt is selected and the mass percent of the lithium borate salt is controlled to fall within the range specified above and to satisfy $0.01\% \leq A1 + A3 \leq 3\%$ and/or $0.1 \leq A1/A3 \leq 10$, the electrolytic solution forms a solid electrolyte interface (SEI) film and a cathode electrolyte interface (CEI) film that are relatively stable under a high voltage, and forms high synergy with the ethylene carbonate and the propylene carbonate, thereby improving the high-temperature storage performance and cycle performance of the electrochemical device.

In an embodiment of this application, the electrolytic solution may further include an additive B. Based on the mass of the electrolytic solution, a mass percent of the additive B is 0.5% to 4%. The additive B includes at least one of succinonitrile, adiponitrile, pimelonitrile, suberonitrile, 1,4-dicyano-2-butene, 1,4-dicyano-2-methyl-2-butene, 1,4-dicyano-2-ethyl-2-butene, 1,4-dicyano-2,3-dimethyl-2-butene, 1,4-dicyano-2,3-diethyl-2-butene, 1,6-dicyano-3-hexene, 1,6-dicyano-2-methyl-3-hexene, 1,6-dicyano-2-methyl-5-methyl-3-hexene, ethylene glycol bis(propionitrile)ether, 1,3,6-hexane tricarbonitrile, or 1,2,3-tri(2-cyanooxy)propane. Preferably, the additive B includes at least one of succinonitrile, adiponitrile, 1,4-dicyano-2-butene, ethylene glycol bis(propionitrile)ether, 1,3,6-hexane tricarbonitrile, or 1,2,3-tris(2-cyanooxy)propane. By controlling the mass percent of the additive B to fall within the range specified above, the electrolytic solution improves the high-temperature storage performance and cycle performance of the electrochemical device, and controls the production cost. By selecting the additive B specified above, this application further improves the high-temperature storage performance and cycle performance of the electrochemical device.

In an embodiment of this application, the electrolytic solution includes a sultone compound, lithium difluorophosphate, lithium tetrafluoroborate, and 1,3,6-hexane tricarbonitrile.

In an embodiment of this application, the electrolytic solution includes a sultone compound, lithium difluorophosphate, lithium bis(oxalato)borate, and 1,3,6-hexane tricarbonitrile.

In an embodiment of this application, the electrolytic solution includes a sultone compound, lithium difluorophosphate, ethylene sulfate, and 1,3,6-hexane tricarbonitrile.

In an embodiment of this application, the electrolytic solution includes ethylene carbonate, propylene carbonate, fluoroethylene carbonate, 1,3-propane sultone, and vinylene carbonate, and satisfies $c \geq 2A1$ and $c + 2A1 \leq 2.5$. When the selected electrolytic solution includes the foregoing components and the mass percent of the fluoroethylene carbonate and the vinylene carbonate is controlled to fall within the range specified above, this application can diversify components of a protection film formed on surfaces of a positive electrode plate and a negative electrode plate. The formed protection film is stable, and the thickness of the film is in a suitable range, thereby further improving the high-temperature storage performance and cycle performance of the electrochemical device.

In an embodiment of this application, the electrolytic solution may further include a compound represented by Formula (I). Based on the mass of the electrolytic solution, a mass percent g of the compound represented by Formula (I) is 0.01% to 2%:

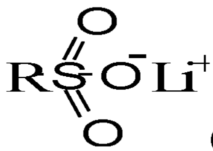
(I).

In the Formula above, R is selected from unsubstituted or Ra-substituted $C_1$ to $C_8$ fluoroalkyls, unsubstituted or Ra-substituted $C_2$ to $C_{10}$ fluoroalkenyl, or unsubstituted or Ra-substituted $C_6$ to $C_{10}$ fluoroaryl.

A substituent Ra of each group independently includes at least one of a cyano group, a carboxyl group, or a sulfate group.

For example, the compound represented by Formula (I) includes any one of compounds represented by Formula I-1 to Formula I-9 below. In an embodiment of this application, the electrolytic solution may further include at least one of compounds represented by Formula I-1 to Formula I-9:

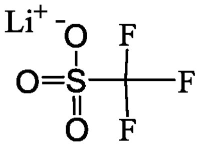
I-1

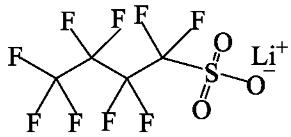
I-2

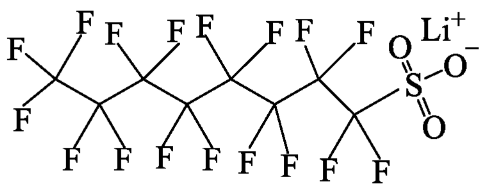
I-3

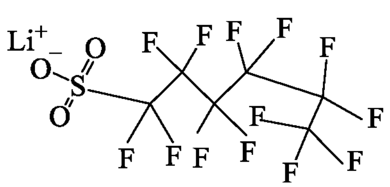
I-4

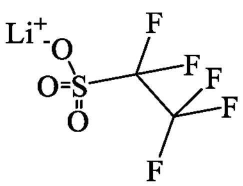
I-5

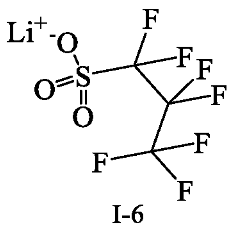
I-6

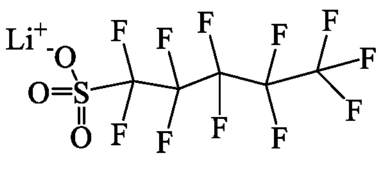
I-7

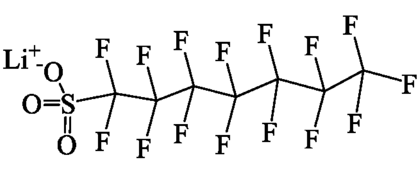
I-8

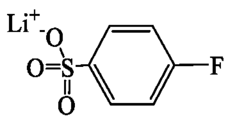
I-9

A second aspect of this application provides an electrochemical device. The electrochemical device includes a positive electrode plate, a negative electrode plate, a separator, and the electrolytic solution according to any one of the embodiments described above.

In an embodiment of this application, the electrochemical device further includes a positive electrode plate. The positive electrode plate includes a positive material layer. The positive material layer includes a positive active material. A particle diameter of the positive active material satisfies 0.4 $\mu m \le D_{v50} \le 20$ $\mu m$, and 2 $\mu m \le D_{v90} \le 40$ $\mu m$. By controlling the $D_{v50}$ and $D_{v90}$ of the positive active material to fall within the range specified above, the positive active material is not prone to react parasitically with the electrolytic solution, thereby improving the cycle performance and safety performance of the electrochemical device and reducing the amount of gassing during the cycling.

In an embodiment of this application, the $D_{v50}$ of the positive active material is f $\mu m$. The electrochemical device satisfies at least one of conditions (i) to (iii): (i) $0.05 \le c/f \times 100 \le 1$; (ii) the electrolytic solution includes a sultone compound, and, based on a mass of the electrolytic solution, a mass percent of the sultone compound is e, and satisfies $0.08 \le e/f \times 100 \le 3$; and (iii) the electrolytic solution includes a compound represented by Formula (I), and, based on the mass of the electrolytic solution, a mass percent of the compound represented by Formula (I) is g, and satisfies $0.02 \le g/f \times 100 \le 1$. When the electrolytic solution includes the sultone compound, the cycle performance and high-temperature storage performance of the electrochemical device can be improved by controlling the value of $e/f \times 100$ to fall within the range specified above. When the electrolytic solution includes the compound represented by Formula (I), the high-temperature storage performance, cycle performance, and safety performance of the electrochemical device can be improved by controlling the value of $g/f \times 100$ to fall within the range specified above.

In an embodiment of this application, the positive active material includes element M. The element M includes at least one of Al, Mg, Ti, Cr, B, Fe, Zr, Y, Na, W, F, or S. Based on a mass of metal elements except lithium in the positive active material, a mass percent of the element M is less than or equal to 0.5%. The cycle performance, capacity retention rate, and safety performance of the electrochemical device can be improved by controlling the mass percent of the element M to fall within the range specified above. The element M falling within the range specified above improves the cycle performance and high-temperature storage performance of the electrochemical device.

In an embodiment of this application, the positive active material includes lithium-nickel-containing transition metal oxide.

In an embodiment of this application, a charge cut-off voltage of the electrochemical device is greater than or equal to 4.2 V.

This application provides an electrolytic solution, an electrochemical device containing the electrolytic solution, and an electronic device. The electrolytic solution includes ethylene carbonate, propylene carbonate, and fluoroethylene carbonate. Based on a mass of the electrolytic solution, a mass percent of the ethylene carbonate is a, a mass percent b of the propylene carbonate is 12% to 35%, a mass percent c of the fluoroethylene carbonate is 0.2% to 2.5%, and the electrolytic solution satisfies $0.1 \le a/b \le 0.75$. The electrolytic solution improves the high-temperature storage performance and cycle performance of the electrochemical device by controlling the mass percent of the propylene carbonate to be 12% to 35%, controlling the mass percent of the fluoroethylene carbonate to be 0.2% to 2.5%, and controlling the mass ratio between the ethylene carbonate and the propylene carbonate to be 0.1 to 0.75.

This application further provides an electronic device. The electronic device includes any one of the electrochemical devices according to this application.

Additional aspects and advantages of some embodiments of this application will be partly described or illustrated herein later or expounded through implementation of an embodiment of this application.

## DETAILED DESCRIPTION OF EMBODIMENTS

To make the objectives, technical solutions, and advantages of this application clearer, the following describes this application in more detail with reference to drawings and embodiments. Evidently, the described embodiments are merely a part of but not all of the embodiments of this application. All other embodiments derived by a person of ordinary skill in the art based on the embodiments of this application without making any creative efforts still fall within the protection scope of this application.

It is hereby noted that in specific embodiments of this application, this application is construed by using a lithium-ion battery as an example of the electrochemical device, but the electrochemical device according to this application is not limited to the lithium-ion battery.

An objective of this application is to provide an electrolytic solution, an electrochemical device containing the electrolytic solution, and an electronic device to improve high-temperature storage performance of the electrochemical device.

A first aspect of this application provides an electrolytic solution. The electrolytic solution includes ethylene carbonate, propylene carbonate, and fluoroethylene carbonate. Based on a mass of the electrolytic solution, a mass percent of the ethylene carbonate is a, a mass percent b of the propylene carbonate is 12% to 35%, a mass percent c

of the fluoroethylene carbonate is 0.2% to 2.5%, and the electrolytic solution satisfies $0.1 \leq a/b \leq 0.75$. Without being limited to any theory, the electrolytic solution improves the high-temperature storage performance and cycle performance of the electrochemical device by controlling the mass percent b of the propylene carbonate to be 12% to 35%, controlling the mass percent c of the fluoroethylene carbonate to be 0.2% to 2.5%, and controlling the mass ratio a/b between the ethylene carbonate and the propylene carbonate to be 0.1 to 0.75.

For example, the mass percent b of the propylene carbonate may be 12%, 15%, 18%, 20%, 23%, 25%, 28%, 30%, 35%, or a value falling within a range formed by any two thereof. When the mass percent of the propylene carbonate is deficient (for example, lower than 12%), the effect in improving the kinetic performance of the electrochemical device is insignificant. With the increase of the mass percent of the propylene carbonate, the kinetic performance of the electrochemical device is improved due to a relatively high dielectric constant (69 c/v.m) of the propylene carbonate. When the mass percent of the propylene carbonate is excessive (for example, higher than 35%), the mass percent of other components decreases, thereby impairing the cycle performance and high-temperature storage performance of the electrochemical device. By controlling the mass percent of the propylene carbonate to fall within the range specified above, the cycle performance and high-temperature storage performance of the electrochemical device are improved.

For example, the value of the a/b ratio may be 0.1, 0.2, 0.3, 0.4, 0.5, 0.6, 0.7, 0.75, or a value falling within a range formed by any two thereof. By controlling the value of the a/b ratio to fall within the range specified above, the electrolytic solution facilitates formation of synergy between the ethylene carbonate and the propylene carbonate, improves the oxidation resistance of the electrolytic solution, reduces the amount of gassing of the electrochemical device during cycling, and improves the cycle performance and high-temperature storage performance of the electrochemical device.

For example, the mass percent c of the fluoroethylene carbonate may be 0.2%, 0.5%, 0.8%, 1%, 1.4%, 1.8%, 2%, 2.5%, or a value falling within a range formed by any two thereof. Without being limited to any theory, when the mass percent of the fluoroethylene carbonate is deficient (for example, lower than 0.2%), the effect in improving the performance of the electrochemical device is insignificant. With the increase of the mass percent of the fluoroethylene carbonate, the cycle performance and capacity retention rate of the electrochemical device are improved. When the mass percent of the fluoroethylene carbonate is excessive (for example, higher than 2.5%), a relatively large amount of residual fluoroethylene carbonate remains after chemical formation of the electrochemical device. Therefore, the electrochemical device is prone to generate gas during cycling and storage at a high voltage, and the expansion rate of the electrochemical device increases. Therefore, by controlling the mass percent of the fluoroethylene carbonate to fall within the range specified above, the electrolytic solution improves the capacity retention rate, cycle performance, and high-temperature storage performance of the electrochemical device. The high voltage referred to herein means a charge cut-off voltage greater than or equal to 4.2 V.

In an embodiment of this application, $0.1 \leq a/b \leq 0.5$, and the mass percent c of the fluoroethylene carbonate is 0.2% to 1.8%. When the foregoing ranges are satisfied, the oxidation resistance of the electrolytic solution as a whole is relatively high, and the amount of residual fluoroethylene carbonate keeps in an appropriate range after chemical formation of the electrochemical device. In this way, the electrolytic solution as a whole is more matching, and the electrochemical device under a high voltage exhibits higher cycle performance and high-temperature storage performance.

In an embodiment of this application, $1.0\% \leq a \leq 20\%$. For example, the mass percent a of the ethylene carbonate may be 1.0%, 2%, 5%, 8%, 10%, 12%, 15%, 18%, 20%, or a value falling within a range formed by any two thereof. Without being limited to any theory, when the mass percent of the ethylene carbonate is deficient (for example, lower than 1.0%), the ethylene carbonate is not enough to effectively suppress the side reactions between the negative active material and the electrolytic solution, thereby deteriorating the cycle performance and high-temperature storage performance of the electrochemical device. With the increase of the mass percent of the ethylene carbonate, the negative electrode is facilitated to form a stable solid electrolyte interface (SEI) film, thereby suppressing the reactions between the negative active material and the electrolytic solution, and improving the cycle performance and capacity retention rate of the electrochemical device. When the mass percent of the ethylene carbonate is excessive (for example, higher than 20%), the electrochemical device is prone to severe gas expansion at a high voltage during cycling, storage, floating charge, and other processes, thereby increasing the volume expansion rate of the electrochemical device. By controlling the mass percent of the ethylene carbonate to fall within the range specified above, the electrolytic solution improves the cycle performance and capacity retention rate of the electrochemical device and reduces the volume expansion rate of the electrochemical device.

In an embodiment of this application, the electrolytic solution may further include a chain carbonate. Based on the mass of the electrolytic solution, a mass percent of the chain carbonate is d. The chain carbonate includes at least one of dimethyl carbonate, ethyl methyl carbonate, methyl propyl carbonate, methyl isopropyl carbonate, methyl butyl carbonate, diethyl carbonate, dipropyl carbonate, or dibutyl carbonate. The electrolytic solution satisfies $0.04 \leq aid \leq 0.35$ and/or $30\% \leq d \leq 60\%$.

For example, the value of the aid ratio may be 0.04, 0.08, 0.1, 0.13, 0.17, 0.2, 0.23, 0.27, 0.3, 0.35, or a value

falling within a range formed by any two thereof. Without being limited to any theory, by controlling the value of the aid ratio to fall within the range specified above, the electrolytic solution facilitates formation of synergy between the ethylene carbonate and the chain carbonate, and improves the cycle performance and high-temperature storage performance of the electrochemical device under a high voltage.

For example, the mass percent d of the chain carbonate may be 30%, 35%, 40%, 45%, 50%, 55%, 60%, or a value falling within a range formed by any two thereof. Without being limited to any theory, when the mass percent of the chain carbonate is deficient (for example, lower than 30%), the effect in improving the performance of the electrochemical device is insignificant. With the increase of the mass percent of the chain carbonate, the chain carbonate improves the comprehensive performance of the electrochemical device under a high voltage by virtue of high chemical stability of the chain carbonate. When the mass percent of the chain carbonate is excessive (for example, higher than 60%), the viscosity of the electrolytic solution increases sharply, thereby hindering the transport of lithium ions and deteriorating the kinetic performance of the electrochemical device. Therefore, by controlling the mass percent of the chain carbonate to fall within the range specified above, the electrolytic solution improves the comprehensive performance such as cycle performance and rate performance of the electrochemical device under a high voltage.

In an embodiment of this application, the electrolytic solution may further include a sultone compound. The sultone compound includes at least one of 1,3-propane sultone, 2,4-butane sultone, or 1,4-butane sultone. Based on the mass of the electrolytic solution, a mass percent e of the sultone compound is 0.5% to 5%, and c is less than or equal to e. For example, the mass percent of the sultone compound is 0.5%, 1%, 1.5%, 2%, 2.5%, 3%, 3.5%, 4%, 4.5%, 5%, or a value falling within a range formed by any two thereof, and is higher than the mass percent of the fluoroethylene carbonate.

Without being limited to any theory, when the mass percent of the sultone compound is deficient (for example, lower than 0.5%), the effect in improving the performance of the electrochemical device is insignificant. With the increase of the mass percent of the sultone compound, the negative electrode is facilitated to form a stable SEI film to suppress the side reactions between the electrolytic solution and the negative active material, and the positive electrode is facilitated to form a stable cathode electrolyte interface (CEI) film to suppress the phase transition of the positive electrode, thereby improving the cycle performance, suppressing the gassing during cycling, and improving the high-temperature storage performance and the like of the electrochemical device. When the mass percent of the sultone compound is excessive (for example, higher than 5%), both the kinetic performance and the cycle performance of the electrochemical device are deteriorated. In addition, when the mass percent of the sultone compound is less than that of fluoroethylene carbonate, a stable SEI film for suppressing oxidative decomposition of the fluoroethylene carbonate at the negative electrode is unable to be formed, thereby impairing the high-temperature storage performance and cycle performance of the electrochemical device, and deteriorating gas production during cycling. By controlling the mass percent of the sultone compound to fall within the range specified above and to be greater than the mass percent of fluoroethylene carbonate, the electrolytic solution improves the cycle performance and high-temperature storage performance of the electrochemical device, and reduces the amount of gassing during cycling. In this application, the positive electrode may mean a positive electrode plate, and the negative electrode may mean a negative electrode plate.

In an embodiment of this application, the electrolytic solution may further include an additive A. The additive A includes at least one of vinylene carbonate, vinyl ethylene carbonate, ethylene sulfate, lithium difluorophosphate, or a lithium borate salt. Without being limited to any theory, by selecting the additive A specified above, the electrolytic solution improves the cycle performance, high-temperature storage performance, and safety performance of the electrochemical device under a high voltage.

In an embodiment of this application, the electrolytic solution satisfies at least one of the following relations: (a) the additive A includes vinylene carbonate, and, based on the mass of the electrolytic solution, a mass percent A1 of the vinylene carbonate is 0.01% to 2%; (b) the additive A includes ethylene sulfate, and, based on the mass of the electrolytic solution, a mass percent A2 of the ethylene sulfate is 0.01% to 2%; (c) the additive A includes a lithium borate salt, the lithium borate salt includes at least one of lithium tetrafluoroborate, lithium difluoro(oxalato)borate, or lithium bis(oxalato)borate, and, based on the mass of the electrolytic solution, a mass percent A3 of the lithium borate salt is 0.01% to 2%; (d) the electrolytic solution includes vinylene carbonate and ethylene sulfate, and, based on the mass of the electrolytic solution, the mass percent of the vinylene carbonate is A1, the mass percent of the ethylene sulfate is A2, and the electrolytic solution satisfies $0.1 < A2/A1 \leq 12$; (e) the electrolytic solution includes vinylene carbonate and ethylene sulfate, and, based on the mass of the electrolytic solution, the mass percent of the vinylene carbonate is A1, the mass percent of the ethylene sulfate is A2, and the electrolytic solution satisfies $0.02\% \leq A1 + A2 \leq 3\%$; (f) the electrolytic solution includes vinylene carbonate and a lithium borate salt, and, based on the mass of the electrolytic solution, the mass percent of the vinylene carbonate is A1, the mass percent of the lithium borate salt is A3, and the electrolytic solution satisfies $0.01\% \leq A1 + A3 \leq 3\%$; and (g) the electrolytic solution includes vinylene carbonate and a lithium borate salt, and, based on the mass of the electrolytic solution, the mass percent of the vinylene carbonate is A1, the mass percent of the lithium borate salt is A3, and the electrolytic solution satisfies $0.1 \leq A1/A3 \leq 10$. With the electrolytic solution satisfying at least one of the relations specified above, the electrolytic solution facilitates formation

of an SEI film and a CEI film that are relatively stable under a high voltage, and forms high synergy between materials, thereby improving the high-temperature storage performance and cycle performance of the electrochemical device.

In an embodiment of this application, the additive A may include vinylene carbonate. Based on the mass of the electrolytic solution, a mass percent A1 of the vinylene carbonate is 0.01% to 2%. For example, the mass percent A1 of the vinylene carbonate may be 0.01%, 0.05%, 0.1%, 0.3%, 0.5%, 0.8%, 1%, 1.2%, 1.5%, 1.8%, 2%, or a value falling within a range formed by any two thereof. By controlling the mass percent of the vinylene carbonate to fall within the range specified above, the negative electrode is facilitated to form a stable SEI film to suppress the side reactions between the electrolytic solution and the negative active material, and the positive electrode is facilitated to form a stable CEI film to suppress the phase transition of the positive electrode, thereby improving the cycle performance, suppressing the gassing during cycling, and improving the high-temperature storage performance and the like of the electrochemical device. In addition, by controlling the mass percent of the vinylene carbonate to fall within the range specified above, this application reduces the probability that an excessive mass percent of the vinylene carbonate leads to an excessive thickness of the formed protection film and affects the impedance of the battery, and reduces the probability that a deficient mass percent of the ethylene carbonate leads to insufficient protection for the positive electrode or negative electrode.

In an embodiment of this application, the additive A may include ethylene sulfate. Based on the mass of the electrolytic solution, a mass percent A2 of the ethylene sulfate is 0.01% to 2%. For example, the mass percent A2 of the ethylene sulfate may be 0.01%, 0.05%, 0.1%, 0.3%, 0.5%, 0.8%, 1%, 1.2%, 1.5%, 1.8%, 2%, or a value falling within a range formed by any two thereof.

In an embodiment of this application, the additive A may include vinylene carbonate and ethylene sulfate. Based on the mass of the electrolytic solution, the mass percent of the vinylene carbonate is A1, the mass percent of the ethylene sulfate is A2, and the electrolytic solution satisfies $0.1 < A2/A1 \leq 12$ and/or $0.02\% \leq A1 + A2 \leq 3\%$. For example, the value of the A2/A1 ratio may be 0.1, 1, 2, 3, 4, 5, 6, 7, 8, 9, 10, 11, 12, or a value falling within a range formed by any two thereof. For example, the value of A1+A2 may be 0.02%, 0.05%, 0.1%, 0.5%, 1%, 1.5%, 2%, 2.5%, 3%, or a value falling within a range formed by any two thereof.

By controlling the mass percent of the vinylene carbonate and the ethylene sulfate to fall within the range specified above and satisfy $0.1 < A2/A1 \leq 12$ and/or $0.02\% \leq A1 + A2 \leq 3\%$, the electrolytic solution forms an SEI film and a CEI film that are relatively stable under a high voltage, and forms high synergy with the ethylene carbonate and the propylene carbonate, thereby improving the high-temperature storage performance and cycle performance of the electrochemical device.

In an embodiment of this application, the additive A may include vinylene carbonate and a lithium borate salt. The lithium borate salt may include at least one of lithium tetrafluoroborate, lithium difluoro(oxalato)borate, or lithium bis(oxalato)borate. Based on the mass of the electrolytic solution, a mass percent A3 of the lithium borate salt is 0.01% to 2%, and the electrolytic solution satisfies $0.01\% \leq A1 + A3 \leq 3\%$ and/or $0.1 \leq A1/A3 \leq 10$. For example, the mass percent A3 of the lithium borate salt may be 0.01%, 0.05%, 0.1%, 0.3%, 0.5%, 0.8%, 1%, 1.2%, 1.5%, 1.8%, 2%, or a value falling within a range formed by any two thereof. For example, the value of A1+A3 may be 0.01%, 0.05%, 0.1%, 0.5%, 1%, 1.5%, 2%, 2.5%, 3%, or a value falling within a range formed by any two thereof. For example, the value of the A1/A3 ratio may be 0.1, 1, 2, 3, 4, 5, 6, 7, 8, 9, 10, or a value falling within a range formed by any two thereof.

Without being limited to any theory, when the lithium borate salt is selected and the mass percent of the lithium borate salt is controlled to fall within the range specified above and to satisfy $0.01\% \leq A1 + A3 \leq 3\%$ and/or $0.1 \leq A1/A3 \leq 10$, the electrolytic solution forms an SEI film and a CEI film that are relatively stable under a high voltage, and forms high synergy with the ethylene carbonate and the propylene carbonate, thereby improving the high-temperature storage performance and cycle performance of the electrochemical device.

In an embodiment of this application, the electrolytic solution may further include an additive B. Based on the mass of the electrolytic solution, a mass percent of the additive B is 0.5% to 4%. The additive B includes at least one of succinonitrile, adiponitrile, pimelonitrile, suberonitrile, 1,4-dicyano-2-butene, 1,4-dicyano-2-methyl-2-butene, 1,4-dicyano-2-ethyl-2-butene, 1,4-dicyano-2,3-dimethyl-2-butene, 1,4-dicyano-2,3 -diethyl-2-butene, 1,6-dicyano-3 -hexene, 1,6-dicyano-2-methyl-3 -hexene, 1,6-dicyano-2-methyl-5-methyl-3-hexene, ethylene glycol bis(propionitrile)ether, 1,3,6-hexane tricarbonitrile, or 1,2,3-tri(2-cyanooxy)propane. Preferably, the additive B includes at least one of succinonitrile, adiponitrile, 1,4-dicyano-2-butene, ethylene glycol bis(propionitrile)ether, 1,3,6-hexane tricarbonitrile, or 1,2,3-tris(2-cyanooxy)propane. For example, the mass percent of the additive B may be 0.5%, 1%, 1.5%, 2%, 2.5%, 3%, 3.5%, 4%, or a value falling within a range formed by any two thereof.

Without being limited to any theory, when the mass percent of the additive B is deficient (for example, lower than 0.5%), the effect in improving the structural stability of the CEI film is insignificant. When the mass percent of the additive B falls within an appropriate range, the synergy generated by complexation between the additive B and the transition metal in the positive active material is conducive to formation of a more stable CEI film, thereby suppressing side reactions at the cathode electrolyte interface and improving the high-temperature storage performance and cycle performance of the electrochemical device. When the mass percent of the additive B is excessive (for example, higher

than 4%), the performance of the electrochemical device is not further improved, a part of the additive B is wasted, and the production cost is increased. By controlling the mass percent of the additive B to fall within the range specified above, the electrolytic solution improves the high-temperature storage performance and cycle performance of the electrochemical device, and controls the production cost. Without being limited to any theory, by selecting the additive B specified above, this application further improves the high-temperature storage performance and cycle performance of the electrochemical device.

In an embodiment of this application, the electrolytic solution includes a sultone compound, lithium difluorophosphate, lithium tetrafluoroborate, and 1,3,6-hexane tricarbonitrile.

In an embodiment of this application, the electrolytic solution includes a sultone compound, lithium difluorophosphate, lithium bis(oxalato)borate, and 1,3,6-hexane tricarbonitrile.

In an embodiment of this application, the electrolytic solution includes a sultone compound, lithium difluorophosphate, ethylene sulfate, and 1,3,6-hexane tricarbonitrile. When the electrolytic solution includes the foregoing components, the sultone compound, the lithium difluorophosphate, the ethylene sulfate, and the 1,3,6-hexane tricarbonitrile compound work together to improve the stability of the SEI film and the CEI film, thereby further improving the high-temperature storage performance and cycle performance of the electrochemical device.

In an embodiment of this application, the electrolytic solution includes ethylene carbonate, propylene carbonate, fluoroethylene carbonate, 1,3-propane sultone, and vinylene carbonate, and satisfies $c \geq 2A1$ and $c + 2A1 \leq 2.5\%$. For example, the value of c+2A1 may be 0.22%, 0.5%, 0.75%, 1%, 1.25%, 1.5%, 1.75%, 2%, 2.25%, 2.5%, or a value falling within a range formed by any two thereof. When the electrolytic solution includes the foregoing components and the mass percent of the fluoroethylene carbonate and the vinylene carbonate is controlled to fall within the range specified above, this application can diversify components of the SEI film and the CEI film, and make the stability and thickness fall within an appropriate range, thereby further improving the high-temperature storage performance and cycle performance of the electrochemical device.

In an embodiment of this application, the electrolytic solution may further include a compound represented by Formula (I). Based on the mass of the electrolytic solution, a mass percent g of the compound represented by Formula (I) is 0.01% to 2%:

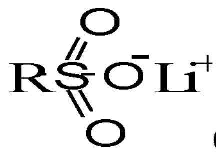

(I).

In the Formula above, R is selected from unsubstituted or Ra-substituted $C_1$ to $C_8$ fluoroalkyls, unsubstituted or Ra-substituted $C_2$ to $C_8$ fluoroalkenyl, or unsubstituted or Ra-substituted $C_6$ to $C_{10}$ fluoroaryl.

A substituent Ra of each group independently includes at least one of a cyano group, a carboxyl group, or a sulfate group.

For example, the compound represented by Formula (I) includes any one of compounds represented by Formula I-1 to Formula I-9 below. In an embodiment of this application, the electrolytic solution may further include at least one of compounds represented by Formula I-1 to Formula I-9:

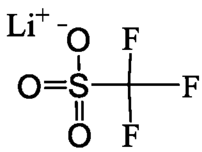

I-1

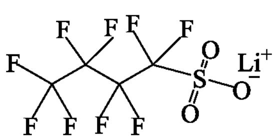

I-2

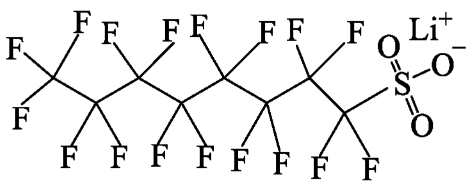

I-3

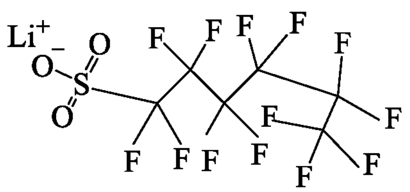

I-4

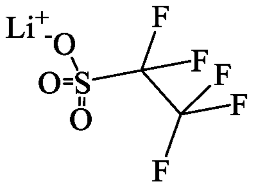

I-5

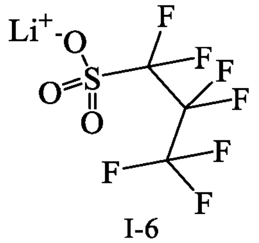

I-6

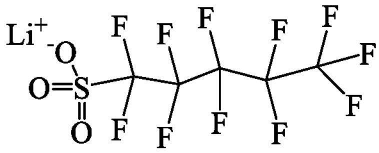

I-7

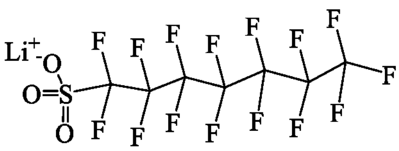

I-8

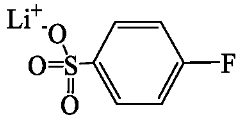

I-9

For example, the mass percent g of the compound represented by Formula (I) may be 0.01%, 0.05%, 0.1%, 0.3%, 0.5%, 0.8%, 1%, 1.2%, 1.5%, 1.8%, 2%, or a value falling within a range formed by any two thereof. Without being limited to any theory, by controlling the mass percent of the compound represented by Formula (I) to fall within the range specified above, because the compound is relatively stable under a high voltage and resistant to oxidation, the compound facilitates the negative electrode to form a stable SEI film to suppress the side reactions between the electrolytic solution and the negative active material, and also facilitates the positive electrode to form a stable CEI film to suppress the phase transition of the positive electrode. Moreover, during cycling of the electrochemical device, the compound can keep repairing the SEI film and the CEI film, thereby improving the high-temperature storage performance, cycle performance, and safety performance of the electrochemical device under a high voltage.

In an embodiment of this application, the electrolytic solution may further include at least one of ethylene carbonate, propylene carbonate, butylene carbonate, methyl acetate, ethyl acetate, propyl acetate, butyl acetate, methyl propionate, ethyl propionate, propyl propionate, butyl propionate, methyl butyrate, ethyl butyrate, propyl butyrate, methyl valerate, ethyl valerate, methyl pivalate, ethyl pivalate, or butyl pivalate.

In an embodiment of this application, the electrolytic solution may further include a lithium salt. The lithium salt includes at least one of lithium hexafluorophosphate ($LiPF_6$), lithium bisfluorosulfonimide (LiFSI), or lithium bis(trifluoromethanesulfonyl)imide (LiTFSI). Preferably, the lithium salt includes $LiPF_6$. The concentration of the lithium salt is not particularly limited in this application, as long as the objectives of this application can be achieved. For example, based on the mass of the electrolytic solution, the mass percent of the lithium salt may be 8% to 18%, and preferably 10% to 15%.

A second aspect of this application provides an electrochemical device. The electrochemical device includes a positive electrode plate, a negative electrode plate, a separator, and the electrolytic solution according to any one of the embodiments of this application. The obtained electrochemical device achieves excellent high-temperature storage performance and cycle performance.

In an embodiment of this application, the electrochemical device further includes a positive electrode plate. The positive electrode plate includes a positive material layer. The positive material layer includes a positive active material. A particle diameter of the positive active material satisfies 0.4 μm ≤ $D_{v50}$ ≤ 20 μm, and 2 μm ≤ $D_{v90}$ <_ 40 μm. For example, the $D_{v50}$ of the positive active material may be 0.4 μm, 1 μm, 5 μm, 8 μm, 10 μm, 13 μm, 15 μm, 18 μm, 20 μm, or a value falling within a range formed by any two thereof. The $D_{v90}$ of the positive active material may be 2 μm, 5 μm, 10 μm, 15 μm, 20 μm, 25 μm, 30 μm, 35 μm, 40 μm, or a value falling within a range formed by any two thereof. Without being limited to any theory, by controlling the $D_{v50}$ and $D_{v90}$ of the positive active material to fall within the range specified above, the positive active material is not prone to react parasitically with the electrolytic solution, and can suppress the gassing of the electrochemical device during cycling, reduce the mass percent of the additive in the electrolytic solution, form a stable CEI film, further suppress the occurrence of side reactions, improve the cycle performance and safety performance of the electrochemical device, and reduce the amount of gassing during the cycling.

In an embodiment of this application, the $D_{v50}$ of the positive active material is f μm. The electrochemical device satisfies at least one of conditions (i) to (iii): (i) $0.05 \leq c/f \times 100 \leq 1$; (ii) the electrolytic solution includes a sultone compound, and, based on a mass of the electrolytic solution, a mass percent of the sultone compound is e, and satisfies $0.08 \leq e/f \times 100 \leq 3$; and (iii) the electrolytic solution includes a compound represented by Formula (I), and, based on the mass of the electrolytic solution, a mass percent of the compound represented by Formula (I) is g, and satisfies $0.02 \leq g/f \times 100 \leq 1$. For example, the value of $c/f\times100$ may be 0.05, 0.1, 0.2, 0.3, 0.4, 0.5, 0.6, 0.7, 0.8, 0.9, 1, or a value falling within a range formed by any two thereof. For example, the value of $e/f\times100$ may be 0.08, 0.1, 0.5, 1, 1.5, 2, 2.5, 3, or a value falling within a range formed by any two thereof. For example, the value of $g/f\times100$ may be 0.02, 0.1, 0.2,

0.3, 0.4, 0.5, 0.6, 0.7, 0.8, 0.9, 1, or a value falling within a range formed by any two thereof.

Without being limited to any theory, by controlling the value of c/f×100 to fall within the range specified above, the electrolytic solution improves the cycle performance and high-temperature storage performance of the electrochemical device and reduces the expansion rate of the electrochemical device. When the electrolytic solution includes the sultone compound, the cycle performance and high-temperature storage performance of the electrochemical device can be improved by controlling the value of e/f×100 to fall within the range specified above. When the electrolytic solution includes the compound represented by Formula (I), the high-temperature storage performance, cycle performance, and safety performance of the electrochemical device can be improved by controlling the value of g/f×100 to fall within the range specified above.

In an embodiment of this application, the positive active material includes element M. The element M includes at least one of Al, Mg, Ti, Cr, B, Fe, Zr, Y, Na, W, F, or S. Based on a mass of metal elements except lithium in the positive active material, a mass percent of the element M is less than or equal to 0.5%. For example, the mass percent of the element M is 0.05%, 0.1%, 0.2%, 0.3%, 0.4%, or 0.5%. Without being limited to any theory, when the mass percent of the element M is excessive (for example, higher than 0.5%), the positive active material is prone to react parasitically with the electrolytic solution to generate gas, thereby impairing the cycle performance, capacity retention rate, and safety performance of the electrochemical device. Therefore, the cycle performance, capacity retention rate, and safety performance of the electrochemical device can be improved by controlling the mass percent of the element M to fall within the range specified above. The element M falling within the range specified above improves the cycle performance and high-temperature storage performance of the electrochemical device.

In an embodiment of this application, the positive active material includes lithium-nickel-containing transition metal oxide.

In an embodiment of this application, the positive active material includes lithium nickel cobalt manganese oxide.

In an embodiment of this application, the positive active material further includes other elements, for example, at least one of P, Si, or Cu.

In an embodiment of this application, a charge cut-off voltage of the electrochemical device according to any one of the foregoing embodiments is greater than or equal to 4.2 V.

In an embodiment of this application, the charge cut-off voltage of the electrochemical device is 4.2 V to 5.0 V.

In this application, the positive electrode plate generally includes a positive current collector and a positive material layer. In this application, the positive current collector is not particularly limited, as long as the objectives of this application can be achieved. For example, the positive current collector may include, but without being limited to, an aluminum foil, an aluminum alloy foil, a composite current collector, or the like. The thickness of the positive current collector is not particularly limited in this application, as long as the objectives of this application can be achieved. For example, the thickness is 6 μm to 18 μm.

In this application, the positive material layer may further include a conductive agent. The conductive agent is not particularly limited in this application, as long as the objectives of this application can be achieved. For example, the conductive agent may include, but without being limited to, at least one of conductive carbon black (Super P), carbon nanotubes (CNTs), carbon fibers, flake graphite, Ketjen black, graphene, a metal material, or a conductive polymer. The carbon nanotubes may include, but without being limited to, single-walled carbon nanotubes and/or multi-walled carbon nanotubes. The carbon fibers may include, but without being limited to, vapor grown carbon fibers (VGCF) and/or carbon nanofibers. The metal material may include, but without being limited to, metal powder and/or metal fibers. Specifically, the metal may include, but without being limited to at least one of copper, nickel, aluminum, or silver. The conductive polymer may include, but without being limited to, at least one of polyphenylene derivatives, polyaniline, polythiophene, polyacetylene, or polypyrrole.

In this application, the positive material layer may further include a binder. The binder is not particularly limited in this application, as long as the objectives of this application can be achieved. For example, the binder may include, but without being limited to, at least one of polyacrylic acid, polyacrylic acid sodium, polyacrylic acid potassium, polyacrylic acid lithium, polyimide, polyvinyl alcohol, carboxymethyl cellulose, sodium carboxymethyl cellulose, polyimide, polyamide imide, styrene butadiene rubber, or polyvinylidene fluoride.

Optionally, a surface of the positive material layer may be further coated with a coating. The coating may include, but without being limited to, an oxide of a coating element, a hydroxide of a coating element, an oxyhydroxide of a coating element, an oxycarbonate of a coating element, or a hydroxycarbonate of a coating element. The coating element may include, but without being limited to, at least one of Mg, Al, Co, K, Na, Ca, Si, Ti, V, Sn, Ge, Ga, B, As, or Zr. The method for preparing the coating is not particularly limited in this application, as long as the objectives of this application can be achieved. For example, the coating is prepared by spraying or dip-coating. The thickness of the coating is not particularly limited in this application, as long as the objectives of this application can be achieved. For example, the thickness is 1 μm to 10 μm.

Optionally, the positive electrode plate may further include a conductive layer. The conductive layer is located between the positive current collector and the positive material layer. The components of the conductive layer are not

particularly limited in this application, and may be a conductive layer commonly used in the art. For example, the conductive layer may include, but without being limited to, the foregoing conductive agent and binder.

The electrochemical device according to this application further includes a negative electrode plate. The negative electrode plate is not particularly limited in this application, as long as the objectives of this application can be achieved. For example, the negative electrode plate generally includes a negative current collector and a negative material layer. The negative current collector is not particularly limited, as long as the objectives of this application can be achieved. For example, the negative current collector may include, but without being limited to, a copper foil, a copper alloy foil, a nickel foil, a stainless steel foil, a titanium foil, foamed nickel, foamed copper, or a composite current collector, or the like. The thickness of the negative current collector is not particularly limited in this application, as long as the objectives of this application can be achieved. For example, the thickness is 4 μm to 18 μm.

In this application, the negative material layer includes a negative active material. The negative active material is not particularly limited, as long as the objectives of this application can be achieved. For example, the negative active material may include, but without being limited to, at least one of natural graphite, artificial graphite, mesocarbon microbeads, hard carbon, soft carbon, silicon, a silicon-carbon composite, a Li-Sn alloy, a Li-Sn-O alloy, Sn, SnO, $SnO_2$, spinel-structured lithiated $TiO_2$-$Li_4$, $Ti_5O_{12}$, or a Li-Al alloy.

In this application, the negative material layer may further include a conductive agent. The conductive agent is not particularly limited in this application, as long as the objectives of this application can be achieved. For example, the conductive agent may include, but without being limited to, at least one of the foregoing conductive agents.

In this application, the negative material layer may further include a binder. The binder is not particularly limited in this application, as long as the objectives of this application can be achieved. For example, the binder may include, but without being limited to, at least one of the foregoing binders.

Optionally, the negative electrode plate may further include a conductive layer. The conductive layer is located between the negative current collector and the negative material layer. The components of the conductive layer are not particularly limited in this application, and may be a conductive layer commonly used in the art. The conductive layer may include, but without being limited to, the foregoing conductive agent and binder.

The electrochemical device according to this application further includes a separator. The separator is not particularly limited in this application, as long as the objectives of this application can be achieved. For example, the separator may include, but without being limited to, at least one of polyethylene (PE)-based, polypropylene (PP)-based, or polytetrafluoroethylene-based polyolefin (PO) separator, a polyester film (such as polyethylene terephthalate (PET) film), a cellulose film, a polyimide film (PI), a polyamide film (PA), a spandex or aramid film, a woven film, a non-woven film (non-woven fabric), a microporous film, a composite film, separator paper, a calendered film, or a spinning film. The separator according to this application may be a porous structure. The pore size of the separator is not particularly limited, as long as the objectives of this application can be achieved. For example, the pore size may be 0.01 μm to 1 μm. The thickness of the separator is not particularly limited in this application, as long as the objectives of this application can be achieved. For example, the thickness may be 5 μm to 100 μm.

For example, the separator may include a substrate layer and a surface treatment layer. The substrate layer may be a non-woven fabric, film or composite film, which, in each case, is porous. The material of the substrate layer may include, but without being limited to, at least one of polyethylene, polypropylene, polyethylene terephthalate, polyimide, or the like. Optionally, the substrate layer may be a polypropylene porous film, a polyethylene porous film, a polypropylene non-woven fabric, a polyethylene non-woven fabric, or a polypropylene-polyethylene-polypropylene porous composite film. Optionally, the surface treatment layer is disposed on at least one surface of the substrate layer. The surface treatment layer may be a polymer layer or an inorganic compound layer, or a layer compounded of a polymer and an inorganic compound.

The inorganic compound layer may include, but without being limited to, inorganic particles and a binder. The inorganic particles are not particularly limited in this application, and may include, but without being limited to, at least one of aluminum oxide, silicon oxide, magnesium oxide, titanium oxide, hafnium dioxide, tin oxide, ceria, nickel oxide, zinc oxide, calcium oxide, zirconium oxide, yttrium oxide, silicon carbide, boehmite, aluminum hydroxide, magnesium hydroxide, calcium hydroxide, barium sulfate, or the like. The binder is not particularly limited in this application, and may include, but without being limited to, at least one of polyvinylidene difluoride, poly(vinylidene difluoride-co-hexafluoropropylene), polyamide, polyacrylonitrile, polyacrylate, polyacrylic acid, polyacrylic acid sodium salt, polyvinylpyrrolidone, polyvinyl ether, poly methyl methacrylate, polytetrafluoroethylene, or polyhexafluoropropylene. The polymer layer includes a polymer, and the material of the polymer may include, but without being limited to, at least one of polyamide, polyacrylonitrile, acrylate polymer, polyacrylic acid, polyacrylate, polyvinylpyrrolidone, polyvinyl ether, polyvinylidene difluoride, poly(vinylidene difluoride-co-hexafluoropropylene), or the like.

The process of preparing the electrochemical device is well known to a person skilled in the art, and is not particularly limited in this application. For example, the preparation process may include, but without being limited to, the following steps: stacking the positive electrode plate, the separator, and the negative electrode plate in sequence, performing operations as required such as winding and folding to obtain an electrode assembly, putting the electrode

assembly into a housing, injecting the electrolytic solution into the housing, and sealing the housing. In addition, an overcurrent prevention element, a guide plate, and the like may be placed into the housing as required, so as to prevent the rise of internal pressure, overcharge, and overdischarge of the electrochemical device.

A third aspect of this application provides an electronic device. The electronic device includes the electrochemical device according to any one of the foregoing embodiments of this application.

The electronic device according to this application is not particularly limited, and may be any electronic device known in the prior art. In some embodiments, the electronic device may include, but without being limited to, a notebook computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household battery, lithium-ion capacitor, and the like.

This application provides an electrolytic solution, an electrochemical device containing the electrolytic solution, and an electronic device. The electrolytic solution includes ethylene carbonate, propylene carbonate, and fluoroethylene carbonate. Based on a mass of the electrolytic solution, a mass percent of the ethylene carbonate is a, a mass percent b of the propylene carbonate is 12% to 35%, a mass percent c of the fluoroethylene carbonate is 0.1% to 2.5%, and the electrolytic solution satisfies $0.1 \leq a/b \leq 0.75$. The electrolytic solution improves the high-temperature storage performance and cycle performance of the electrochemical device by controlling the mass percent of the propylene carbonate to be 12% to 35%, controlling the mass percent of the fluoroethylene carbonate to be 0.1% to 2.5%, and controlling the mass ratio between the ethylene carbonate and the propylene carbonate to be 0.1 to 0.75.

**Embodiments**

The implementations of this application are described below in more detail with reference to embodiments and comparative embodiments. Various tests and evaluations are performed by the following methods. In addition, unless otherwise specified, "fraction" and "%" are a percent by mass.

**Test methods and devices:**

**Testing the cycle performance:**

Putting the lithium-ion battery into a 25° C thermostat, and leaving the battery to stand for 30 minutes so that the temperature of the lithium-ion battery is constant. After the lithium-ion battery reaches a constant-temperature state, charging the lithium-ion battery at a constant current of 1 C until the voltage reaches 4.45 V, and then charging the battery at a constant voltage of 4.45 V until the current reaches 0.05 C. Measuring the thickness of the lithium-ion battery at this time by using a micrometer and recording the thickness value as an initial thickness. Next, discharging the battery at a constant current of 1 C until the voltage reaches 2.8 V, thereby completing a charge-and-discharge cycle. Recording the discharge capacity at the end of this cycle, denoted as a first-cycle discharge capacity. Letting the first-cycle discharge capacity be 100%, and repeating the charge-and-discharge cycle until the discharge capacity fades to 80%. Recording the number of cycles, and measuring the thickness of the lithium-ion battery, denoted as an after-cycling thickness.

The method for testing the cycle performance of the lithium-ion battery at 45 °C is the same as the 25 °C cycle performance test method except that the lithium-ion battery is put into a 45 °C thermostat.

Thickness expansion rate = (after-cycling thickness - initial thickness)/initial thickness $\times$ 100%.

**Testing the high-temperature storage performance:**

Putting the lithium-ion battery into a 25° C thermostat, and leaving the battery to stand for 30 minutes so that the temperature of the lithium-ion battery is constant. Charging the battery at a constant current of 1 C until the voltage reaches 4.45 V, and then charging the battery at a constant voltage until the current reaches 0.05 C. Subsequently, discharging the battery at a constant current of 1 C until the voltage reaches 2.8 V, and recording the discharge capacity at this time as an initial capacity. Subsequently, charging the lithium-ion battery at a constant current of 0.5 C until the voltage reaches 4.45 V, and then charging the battery at a constant voltage until the current reaches 0.05 C. Measuring the thickness of the lithium-ion battery at this time by using a micrometer and recording the thickness value as an initial thickness. Moving the lithium-ion battery under test into a 60 °C thermostat and storing the battery for 90 days (D), during which the thickness of the lithium-ion battery is measured and recorded at intervals of 3 days. At the end of 90 days of storage, moving the battery into 25 °C thermostat, and leaving the battery to stand for 60 minutes. Discharging the

battery at a constant current of 1 C until the voltage reaches 2.8 V, and recording the discharge capacity at this time, denoted as an after-cycling discharge capacity. Subsequently, charging the battery at a constant current of 1 C until the voltage reaches 4.45 V, and then charging the battery at a constant voltage until the current reaches 0.05 C. Next, discharging the battery at a constant current of 1 C until the voltage reaches 2.8 V, and recording the discharge capacity at this time, denoted as a reversible capacity. Measuring the thickness of the lithium-ion battery, denoted as an after-storage thickness.

Thickness expansion rate at the end of 90-day storage at 60°C = (after- storage thickness - initial thickness)/initial thickness × 100%.

Capacity retention rate at the end of 90-day storgae at 60°C = (initial discharge capacity - reversible capacity)/initial discharge capacity × 100%.

**Testing the 0 °C direct current resistance (DCR):**

Charging the lithium-ion battery at a constant current of 0.1 C at a temperature of 0 °C until the voltage reaches 4.4 V, and then charging the battery at a constant voltage of 4.45 V until the current reaches 0.05 C. Leaving the battery to stand for 10 minutes. Discharging the battery at a current of 0.1 C until the voltage reaches 3.4 V, and then leaving the battery to stand for 5 minutes. Next, charging the lithium-ion battery at a constant current of 0.1 C until the voltage reaches 4.4 V, and then charging the battery at a constant voltage of 4.45 V until the current reaches 0.05 C. Leaving the battery to stand for 10 minutes. Discharging the battery at a constant current of 0.1 C for 7 seconds, recording the voltage value as $U_1$, and then discharging the battery at a current of 1 C for 1 second, and recording the voltage value as $U_2$.

Calculating the direct current resistance R of the lithium-ion battery at 0°C by the following formula: $R = (U_2 - U_1)/(1\ C - 0.1\ C)$, where 1 C is a rate of current at which the lithium-ion battery is fully discharged within 1 hour.

**Overcharge test:**

Discharging the lithium-ion battery at a constant current of 0.5 C in a 25 °C environment until the voltage reaches 2.8 V, and then charging the battery at a constant current of 3 C until the voltage reaches 5.7 V. Next, charging the battery at a constant voltage for 2 hours. Monitoring the temperature change on the surface of the lithium-ion battery. The lithium-ion battery is deemed to have passed the test if the battery does not catch fire, burn, or explode. Testing 10 lithium-ion batteries prepared in each embodiment or comparative embodiment, and recording the number of batteries that have passed test.

**Testing the floating charge performance:**

Putting the lithium-ion battery into a 25° C thermostat, and leaving the battery to stand for 30 minutes so that the temperature of the lithium-ion battery is constant. Charging the battery at a constant current of 1 C until the voltage reaches 4.45 V, and then charging the battery at a constant voltage until the current reaches 0.05 C. Subsequently, discharging the battery at a constant current of 1 C until the voltage reaches 2.8 V, and recording the discharge capacity at this time as an initial capacity of the lithium-ion battery. Next, charging the battery at a constant current of 0.5 C until the voltage reaches 4.45 V, and then charging the battery at a constant voltage until the current reaches 0.05 C. Measuring the thickness of the battery at this time by using a micrometer and recording the thickness value as an initial thickness. Moving the lithium-ion battery under test into a 45 °C thermostat and charging the battery for 60 days. At the end of the 60-day storage, moving the battery into 25 °C thermostat, and leaving the battery to stand for 60 minutes. Discharging the battery at a constant current of 1 C until the voltage reaches 2.8 V, and recording the discharge capacity at this time as an after-storage discharge capacity of the lithium-ion battery. Subsequently, charging the battery at a constant current of 1 C until the voltage reaches 4.45 V, and then charging the battery at a constant voltage until the current reaches 0.05 C. Next, discharging the battery at a constant current of 1 C until the voltage reaches 2.8 V, and recording the discharge capacity at this time as a reversible capacity of the lithium-ion battery. Measuring the thickness of the lithium-ion battery and recording the thickness value as an after-floating-charge thickness.

Floating charge thickness expansion rate = (after-floating-charge thickness - initial thickness)/initial thickness × 100%;

Floating charge capacity retention rate = (initial discharge capacity - reversible capacity)/initial discharge capacity × 100%.

**Testing the calendar life performance (ITC):**

Putting the lithium-ion battery into a 45° C thermostat, and leaving the battery to stand for 30 minutes so that the temperature of the lithium-ion battery is constant. After the lithium-ion battery reaches a constant-temperature state, charging the battery at a constant current of 1 C until the voltage reaches 4.45 V, and then charging the battery at a constant voltage of 4.45 V until the current reaches 0.05 C. Measuring the thickness of the battery at this time by using a micrometer, denoted as an initial thickness. Leaving the battery to stand in this state for 24 hours, and then discharging the battery at a constant current of 1 C until the voltage reaches 2.8 V, thereby completing a charge-and-discharge cycle. Letting the first-cycle discharge capacity be 100%, and repeating the charge-and-discharge cycle until the discharge capacity fades to 80%. Recording the number of cycles as a calendar life, and measuring the thickness of the lithium-ion battery, denoted as an after-cycling thickness.

ITC thickness expansion rate = (after-cycling thickness - initial thickness)/initial thickness × 100%.

**Embodiment 1**

**<Preparing a positive electrode plate>**

Mixing a lithium nickel-cobalt-manganese ternary material (NCM613) as a positive active material, conductive carbon black (Super P) as a conductive agent, polyvinylidene difluoride as a binder at a mass ratio of 97: 1.4: 1.6, adding N-methylpyrrolidone (NMP), and stirring the mixture well with a vacuum mixer to obtain a positive slurry, in which the solid content is 72%. Coating one surface of a 10-μm thick positive current collector aluminum foil with the positive slurry evenly, and drying the aluminum foil at 85 °C to obtain a positive electrode plate coated with a 60-μm thick positive material layer on a single side. Repeating the foregoing steps on the other surface of the aluminum foil to obtain a positive electrode plate coated with the positive active material on both sides. Subsequently, performing cold calendering, cutting, slitting, and tab welding, and performing drying under an 85 °C vacuum condition for 4 hours to obtain a positive electrode plate. $D_{v50}$ of the positive active material is 1 μm. The lithium nickel-cobalt-manganese ternary material (NCM613) contains Al. Based on the mass of metal elements except lithium in the positive active material, the mass percent of Al is 0.1%.

**<Preparing a negative electrode plate>**

Mixing artificial graphite as a negative active material, Super P as a conductive gent, sodium carboxymethyl cellulose (CMC) as a thickener, and styrene butadiene rubber (SBR) as a binder at a mass ratio of 96.4: 1.5: 0.5: 1.6. Adding deionized water, and mixing well with a vacuum mixer to obtain a negative slurry in which the solid content is 54%. Coating one surface of a 10-μm thick negative current collector copper foil with the negative slurry evenly, and drying the copper foil at 85 °C to obtain a negative electrode plate coated with a 70-μm thick negative material layer on a single side. Repeating the foregoing steps on the other surface of the copper foil to obtain a negative electrode plate coated with the negative active material on both sides. Subsequently, performing cold calendering, cutting, slitting, and tab welding, and performing drying under a 120 °C vacuum condition for 12 hours to obtain a negative electrode plate.

**<Preparing an electrolytic solution>**

Mixing ethylene carbonate (EC), propylene carbonate (PC), ethyl methyl carbonate (EMC), and diethyl carbonate (DEC) at a mass ratio of 6: 34: 20: 40 between EC, PC, EMC, and DEC in a dry argon atmosphere glovebox to form an organic solvent, and then adding lithium salt $LiPF_6$ into the organic solvent to dissolve. Mixing the solution well, and adding fluoroethylene carbonate (FEC) to dissolve, so that an electrolytic solution is obtained. The mass percent of the $LiPF_6$ in the electrolytic solution is 12%, the mass percent of the FEC in the electrolytic solution is 2%, and the remainder in the electrolytic solution is the organic solvent. The mass percent of the EC in the electrolytic solution is 5.2%, the mass percent of the PC in the electrolytic solution is 29.2%, the mass percent of the EMC in the electrolytic solution is 17.2%, and the mass percent of the DEC in the electrolytic solution is 34.4%.

**<Preparing a separator>**

Using a 7-μm thick polyethylene (PE) film (manufactured by Celgard) as a separator.

**<Preparing a lithium-ion battery>**

Stacking the prepared positive electrode plate, the separator, and the negative electrode plate sequentially in such a way that the separator is located between the positive electrode plate and the negative electrode plate to serve a function of separation, and winding the stacked structure to obtain an electrode assembly. Putting the electrode assembly into an aluminum plastic film package, drying the packaged electrode assembly, and then injecting the electrolytic solution. Performing steps such as vacuum sealing, static standing, chemical formation, degassing, and edge trimming to obtain a lithium-ion battery.

Embodiments 2 to 12 are identical to Embodiment 1 except that the mass percent of the EC, PC, EMC, DEC, and FEC is adjusted separately according to Table 1.

Embodiments 13 to 19 are identical to Embodiment 1 except that the mass percent of the EC, PC, EMC, and DEC is adjusted separately according to Table 2.

Embodiments 20 to 30 are identical to Embodiment 2 except that, at the same time of adding FEC, a sultone compound is added according to Table 3, the mass percent c of the FEC is adjusted according to Table 3, and the mass percent of the organic solvent is adjusted adaptively (the mass ratio between EC, PC, EMC, and DEC is the same as that in Embodiment 2).

Embodiments 31 to 53 are identical to Embodiment 2 except that, at the same time of adding FEC, the additive A and the additive B are added optionally according to Table 4, the mass percent c of the FEC is adjusted according to Table 4, and the mass percent of the organic solvent is adjusted adaptively (the mass ratio between EC, PC, EMC, and DEC is the same as that in Embodiment 2).

Embodiments 54 to 59 are identical to Embodiment 2 except that, at the same time of adding FEC, the compound represented by Formula (I) is added according to Table 5, and the mass percent of the organic solvent is adjusted adaptively (the mass ratio between EC, PC, EMC, and DEC is the same as that in Embodiment 2).

Embodiments 60 to 75 are identical to Embodiment 2 except that the mass percent c of the FEC, the $D_{v50}$ diameter f of the positive active material, the mass percent e of the sultone compound, and the mass percent g of the compound represented by Formula (I) are adjusted according to Table 6, and the mass percent of the organic solvent is adjusted adaptively (the mass ratio between EC, PC, EMC, and DEC is the same as that in Embodiment 2).

Comparative Embodiments 1 to 3 are identical to Embodiment 1 except that the mass percent of the EC, PC, EMC, DEC, and FEC is adjusted separately according to Table 1.

**Table 1**

| | Mass percent a of EC (%) | Mass percent b of PC (%) | Mass percent of EMC (%) | Mass percent of DEC (%) | a/b | Mass percent c of FEC (%) | Number of cycles at 25 °C (cls) | Number of cycles at 45 °C (cls) | Thickness expansion rate after cycling at 45 °C (%) | Thickness expansion rate after 90-day storage at 60 °C (%) | Capacity retention rate after 90-day storage at 60 °C (%) |
|---|---|---|---|---|---|---|---|---|---|---|---|
| Embodiment 1 | 5.2 | 29.2 | 17.2 | 34.4 | 0.18 | 2 | 301 | 212 | 23 | 108 | 82 |
| Embodiment 2 | 8 | 30 | 16 | 32 | 0.27 | 2 | 517 | 301 | 10 | 83 | 88 |
| Embodiment 3 | 14 | 26 | 15.3 | 30.7 | 0.54 | 2 | 547 | 362 | 10 | 61 | 91 |
| Embodiment 4 | 17.1 | 22.9 | 15.3 | 30.7 | 0.75 | 2 | 549 | 363 | 12 | 63 | 89 |
| Embodiment 5 | 1.7 | 12 | 24.1 | 48.2 | 0.14 | 2 | 287 | 205 | 25 | 90 | 78 |
| Embodiment 6 | 10 | 28 | 16.9 | 32.8 | 0.36 | 0.3 | 317 | 221 | 21 | 79 | 83 |
| Embodiment 7 | 10 | 28 | 16.8 | 32.7 | 0.36 | 0.5 | 326 | 225 | 20 | 72 | 85 |
| Embodiment 8 | 10 | 28 | 16.7 | 32.3 | 0.36 | 1 | 445 | 287 | 15 | 36 | 89 |
| Embodiment 9 | 10 | 28 | 16.5 | 32 | 0.36 | 1.5 | 489 | 318 | 11 | 33 | 90 |
| Embodiment 10 | 10 | 28 | 16.4 | 31.8 | 0.36 | 1.8 | 509 | 326 | 20 | 45 | 89 |
| Embodiment 11 | 10 | 28 | 16.2 | 31.3 | 0.36 | 2.5 | 528 | 343 | 26 | 87 | 88 |
| Embodiment 12 | 10 | 35 | 16 | 25 | 0.29 | 2 | 345 | 243 | 21 | 59 | 81 |
| Comparative Embodiment 1 | 0 | 40 | 15.3 | 30.7 | 0 | 2 | 153 | 95 | 72 | 197 | 53 |
| Comparative Embodiment 2 | 24 | 16 | 15.3 | 30.7 | 1.5 | 2 | 245 | 178 | 20 | 137 | 69 |
| Comparative Embodiment 3 | 10 | 28 | 16.95 | 33 | 0.36 | 0.05 | 163 | 110 | 58 | 162 | 64 |

Table 2

| | Mass percent a of EC (%) | Mass percent b of PC (%) | Mass percent d of chain carbonate (%) | | a/d | Number of cycles at 45 °C (cls) | Thickness expansion rate after cycling at 45 °C (%) | Thickness expansion rate after 90-day storage at 60 °C (%) | Floating charge thickness expansion rate (%) | 0 °C DCR (mΩ) | Overcharge test (pcs) |
|---|---|---|---|---|---|---|---|---|---|---|---|
| | | | Mass percent of EMC (%) | Mass percent of DEC (%) | | | | | | | |
| Embodiment 13 | 8.6 | 25.8 | 25.8 | 25.8 | 0.17 | 328 | 10 | 21 | 48 | 60.8 | 2 |
| Embodiment 14 | 8.6 | 25.8 | 17.2 | 34.4 | 0.17 | 352 | 9 | 18 | 35 | 62.5 | 5 |
| Embodiment 15 | 8.6 | 25.8 | 8.6 | 43 | 0.17 | 377 | 8 | 15 | 23 | 63.9 | 8 |
| Embodiment 16 | 8.6 | 25.8 | 0 | 51.6 | 0.17 | 381 | 7 | 13 | 21 | 64.4 | 9 |
| Embodiment 17 | 19 | 31 | 18 | 18 | 0.53 | 25 | 11 | 15 | 35 | 65.6 | 2 |
| Embodiment 18 | 8.6 | 28.4 | 34.4 | 14.6 | 0.18 | 368 | 12 | 51 | 62 | 61.1 | 0 |
| Embodiment 19 | 8.6 | 17.2 | 17.2 | 43 | 0.14 | 372 | 12 | 48 | 57 | 61.2 | 1 |

**Table 3**

| | Mass percent c of FEC (%) | Sultone compound | Mass percent e of sultone compound (%) | Number of cycles at 45 °C (cls) | Calendar life (cls) | ITC thickness expansion rate (%) | Thickness expansion rate after 90-day storage at 60 °C (%) | Floating charge thickness expansion rate (%) | 0 °C DCR (mΩ) | Overcharge test (pcs) |
|---|---|---|---|---|---|---|---|---|---|---|
| Embodiment 2 | 2 | / | / | 301 | 24 | 80 | 83 | 98 | 62.1 | 0 |
| Embodiment 20 | 2 | 1,3-propane sultone | 0.5 | 365 | 37 | 58 | 50 | 70 | 61.5 | 1 |
| Embodiment 21 | 2 | 1,3-propane sultone | 1 | 398 | 49 | 44 | 32 | 58 | 60.7 | 2 |
| Embodiment 22 | 2 | 1,3-propane sultone | 2 | 488 | 60 | 27 | 15 | 36 | 60.5 | 5 |
| Embodiment 23 | 2 | 1,3-propane sultone | 3 | 517 | 65 | 20 | 10 | 21 | 60.9 | 8 |
| Embodiment 24 | 2 | 1,3-propane sultone | 5 | 525 | 68 | 15 | 9 | 20 | 62.6 | 9 |
| Embodiment 25 | 2 | 1,3-propane sultone | 0.1 | 312 | 25 | 77 | 70 | 81 | 62 | 0 |
| Embodiment 26 | 2 | 1,3-propane sultone | 7 | 512 | 65 | 16 | 9 | 21 | 68.7 | 6 |
| Embodiment 27 | 2 | 2,4-butane sultone | 3 | 511 | 62 | 22 | 10 | 22 | 60.8 | 8 |
| Embodiment 28 | 2 | 1,4-butane sultone | 3 | 513 | 63 | 20 | 10 | 21 | 60.6 | 8 |
| Embodiment 29 | 1 | 1,3-propane sultone | 3 | 482 | 61 | 21 | 8 | 14 | 61.5 | 8 |
| Embodiment 30 | 1.5 | 1,3-propane sultone | 3 | 505 | 57 | 26 | 21 | 48 | 61.5 | 6 |
| Note: "/" in Table 3 indicates that the corresponding preparation parameter does not exist. | | | | | | | | | | |

**Table 4**

| | Mass percent of FEC (%) | Additive A | Mass percent of additive A | A1 (%) | A2 (%) | A3 (%) | Additive B | Mass percent of additive B (%) | Number of cycles at 25 °C (cls) | Number of cycles at 45 °C (cls) | Calendar life (cls) | ITC thickness expansion rate (%) | Thickness expansion rate after 90-day storage at 60 °C (%) | Floating charge thickness expansion rate (%) | 0 °C DCR (mΩ) | Overcharge test (pcs) |
|---|---|---|---|---|---|---|---|---|---|---|---|---|---|---|---|---|
| Embodiment 2 | 2 | / | / | / | | / | / | / | 487 | 301 | 24 | 80 | 83 | 98 | 62.1 | 0 |
| Embodiment 31 | 2 | Vinylene carbonate | 0.5 | 0.5 | / | / | / | / | 602 | 362 | 38 | 47 | 40 | 51 | 62 | 2 |
| Embodiment 32 | 2 | Vinylene carbonate | 0.3 | 0.3 | / | / | / | / | 554 | 338 | 33 | 58 | 54 | 68 | 61.8 | 1 |
| Embodiment 33 | 2 | Vinylene carbonate | 0.9 | 0.9 | / | / | / | / | 859 | 519 | 54 | 26 | 20 | 25 | 62.9 | 3 |
| Embodiment 34 | 1 | Vinylene carbonate | 0.7 | 0.7 | / | / | / | / | 573 | 351 | 39 | 44 | 19 | 23 | 61.5 | 3 |
| Embodiment 35 | 1.5 | Vinylene carbonate | 0.8 | 0.8 | / | / | / | / | 679 | 388 | 45 | 30 | 20 | 22 | 61.6 | 3 |
| Embodiment 36 | 0.5 | Vinylene carbonate | 0.8 | 0.8 | / | / | / | / | 520 | 308 | 39 | 44 | 13 | 16 | 61.5 | 3 |
| Embodiment 37 | 2 | Ethylene sulfate | 0.5 | 0.5 | / | / | / | / | 625 | 385 | 42 | 38 | 37 | 45 | 61.5 | 2 |
| Embodiment 38 | 1.5 | Ethylene sulfate | 1.2 | 1.2 | / | / | / | / | 672 | 411 | 55 | 20 | 21 | 24 | 59.4 | 5 |
| Embodiment 39 | 1.2 | Ethylene sulfate | 0.8 | / | 0.8 | / | / | / | 622 | 376 | 46 | 26 | 22 | 25 | 60.5 | 5 |
| Embodiment 40 | 2 | Lithium tetrafluoroborate | 0.2 | / | / | 0.2 | / | / | 541 | 321 | 41 | 37 | 25 | 36 | 60.5 | 2 |

(continued)

| | Mass percent c of FEC (%) | Additive A | Mass percent of additive A | A1 (%) | A2 (%) | A3 (%) | Additive B | Mass percent of additive B (%) | Number of cycles at 25 °C (cls) | Number of cycles at 45 °C (cls) | Calendar life (cls) | ITC thickness expansion rate (%) | Thickness expansion rate after 90-day storage at 60 °C (%) | Floating charge thickness expansion rate (%) | 0 °C DCR (mΩ) | Overcharge test (pcs) |
|---|---|---|---|---|---|---|---|---|---|---|---|---|---|---|---|---|
| Embodiment 41 | 2 | Vinylene carbonate + ethylene sulfate | 0.8+0.8 | 0.8 | 0.8 | / | / | / | 636 | 389 | 53 | 23 | 20 | 23 | 60.6 | 5 |
| Embodiment 42 | 2 | Vinylene carbonate + ethylene sulfate | 1+1.5 | 1 | 1.5 | / | / | / | 721 | 456 | 59 | 18 | 15 | 17 | 59.1 | 5 |
| Embodiment 43 | 2 | Vinylene carbonate + lithium tetrafluoroborate | 1+0.3 | 1 | / | 0.3 | / | / | 693 | 423 | 54 | 21 | 23 | 25 | 59.3 | 5 |
| Embodiment 44 | 2 | Vinylene carbonate + ethylene sulfate + lithium tetrafluoroborate | 1+1+0.3 | 1 | 1 | 0.3 | / | / | 754 | 514 | 65 | 16 | 18 | 17 | 60.3 | 5 |

(continued)

| | Mass percent c of FEC (%) | Additive A | Mass percent of additive A | A1 (%) | A2 (%) | A3 (%) | Additive B | Mass percent of additive B (%) | Number of cycles at 25 °C (cls) | Number of cycles at 45 °C (cls) | Calendar life (cls) | ITC thickness expansion rate (%) | Thickness expansion rate after 90-day storage at 60 °C (%) | Floating charge thickness expansion rate (%) | 0 °C DCR (mΩ) | Overcharge test (pcs) |
|---|---|---|---|---|---|---|---|---|---|---|---|---|---|---|---|---|
| Embodiment 45 | 2 | Vinylene carbonate + ethylene sulfate + lithium difluorophosphate + lithium tetrafluoroborate + lithium difluoro(oxalato) borate + | 0.5+0.5+0.5 + 0.2+0.5+0.5 | 0.5 | 0.5 | 0.2+0.5+0.5 | / | / | 1130 | 725 | 88 | 9 | 12 | 13 | 61.6 | 5 |
| | | lithium bis (oxalato)borate | | | | | | | | | | | | | | |
| Embodiment 46 | 2 | / | / | / | / | / | 1,4-dicyano-2-butene | 2 | 507 | 319 | 51 | 21 | 31 | 23 | 68.1 | 4 |
| Embodiment 47 | 2 | / | / | / | / | / | Adiponitrile + ethylene glycol bis (propionitrile) ether + 1,3,6-hexane tricarbonitrile | 1+1+2 | 552 | 348 | 65 | 17 | 18 | 14 | 69.5 | 7 |
| Embodiment 48 | 1 | / | / | / | / | / | 1,2,3-tris(2-cyanooxy) propane | 2 | 537 | 313 | 61 | 21 | 24 | 19 | 68.5 | 6 |
| Embodiment 49 | 1 | Ethylene sulfate | 1 | 1 | | / | 1,3,6-hexane tricarbonitrile | 1 | 721 | 441 | 82 | 14 | 10 | 11 | 64.3 | 10 |

(continued)

| | Mass percent c of FEC (%) | Additive A | Mass percent of additive A | A1 (%) | A2 (%) | A3 (%) | Additive B | Mass percent of additive B (%) | Number of cycles at 25 °C (cls) | Number of cycles at 45 °C (cls) | Calendar life (cls) | ITC thickness expansion rate (%) | Thickness expansion rate after 90-day storage at 60 °C (%) | Floating charge thickness expansion rate (%) | 0 °C DCR (mΩ) | Overcharge test (pcs) |
|---|---|---|---|---|---|---|---|---|---|---|---|---|---|---|---|---|
| Embodiment 50 | 1 | Ethylene carbonate | 0.8 | | 0.8 | / | 1,3,6-hexane tricarbonitrile | 0.7 | 638 | 399 | 76 | 17 | 13 | 16 | 64.5 | 10 |
| Embodiment 51 | 1 | Vinylene carbonate + ethylene sulfate | 0.6+1.2 | 0.6 | 1.2 | | 1,3,6-hexane tricarbonitrile | 1 | 994 | 621 | 108 | 10 | 8 | 10 | 65.5 | 10 |
| Embodiment 52 | 1 | Vinylene carbonate + ethylene sulfate + lithium difluorophosphate | 0.5+1+0.7 | 0.5 | 1 | / | 1,3,6-hexane tricarbonitrile | 1 | 1167 | 752 | 117 | 9 | 8 | 9 | 63.4 | 10 |
| Embodiment 53 | 2 | Vinylene carbonate + ethylene sulfate + lithium difluorophosphate + lithium tetrafluoroborate + lithium difluoro(oxalato) borate + lithium bis(oxalato) borate | 0.5+0.5+0.5 + 0.2+0.5+0.5 | 0.5 | 0.5 | 0.2+0.5+0.5 | 1,3,6-hexane tricarbonitrile | 2 | 1209 | 800 | 121 | 7 | 8 | 9 | 61.8 | 10 |

Note: "/" in Table 4 indicates that the corresponding preparation parameter does not exist.

**Table 5**

| | Compound represented by Formula (I) | Mass percent g of the compound represented by Formula (I) (%) | Number of cycles at 25 °C (cls) | Number of cycles at 45 °C (cls) | Calendar life (cls) | ITC thickness expansion rate (%) | Thickness expansion rate after 90-day storage at 60 °C (%) | Floating charge thickness expansion rate (%) | 0 °C DCR (mΩ) | Overcharge test (pcs) |
|---|---|---|---|---|---|---|---|---|---|---|
| Embodiment 2 | / | / | 487 | 301 | 24 | 80 | 83 | 98 | 62.1 | 0 |
| Embodiment 54 | I-2 | 0.01 | 489 | 312 | 25 | 76 | 77 | 81 | 62 | 0 |
| Embodiment 55 | I-2 | 0.1 | 525 | 315 | 32 | 63 | 58 | 65 | 61.5 | 0 |
| Embodiment 56 | I-2 | 1 | 646 | 397 | 57 | 20 | 16 | 26 | 60.5 | 3 |
| Embodiment 57 | I-2 | 2 | 651 | 411 | 58 | 19 | 16 | 24 | 60.6 | 3 |
| Embodiment 58 | I-4 | 1 | 653 | 392 | 59 | 18 | 15 | 24 | 60.6 | 3 |
| Embodiment 59 | I-1+I-2+I-4 | 0.5+0.5+0.5 | 707 | 419 | 65 | 15 | 12 | 19 | 60.1 | 4 |

Note: "/" in Table 5 indicates that the corresponding preparation parameter does not exist.

**Table 6**

| | Mass percent c of FEC (%) | $D_{v50}$ diameter f of positive active material (pm) | c/f×100 | Mass percent e of sultone compound (1,3-propane sultone) (%) | e/f×100 | Mass percent g of the compound (1-4) represented by Formula (I) (%) | g/f×100 | Number of cycles at 45 °C (cls) | Calendar life (cls) | ITC thickness expansion rate | Thickness expansion rate after 90-day storage at 60 °C (%) | Floating charge thickness expansion rate (%) | Overcharge test (pcs) |
|---|---|---|---|---|---|---|---|---|---|---|---|---|---|
| Embodiment 60 | 2 | 2 | 1 | / | / | / | / | 306 | 44 | 14 | 51 | 95 | 1 |
| Embodiment 61 | 2 | 4 | 0.5 | / | / | / | / | 468 | 51 | 12 | 30 | 83 | 2 |
| Embodiment 62 | 2 | 6 | 0.33 | / | / | / | / | 518 | 65 | 9 | 22 | 52 | 3 |
| Embodiment 63 | 0.3 | 3 | 0.1 | / | / | / | / | 311 | 45 | 17 | 16 | 41 | 3 |
| Embodiment 64 | 2 | 1 | 2 | 3 | 3 | / | / | 517 | 65 | 20 | 10 | 21 | 8 |
| Embodiment 65 | 2 | 3 | 0.67 | 3 | 1 | / | / | 517 | 67 | 20 | 10 | 21 | 7 |
| Embodiment 66 | 2 | 5 | 0.4 | 3 | 0.6 | / | / | 592 | 75 | 12 | 8 | 12 | 10 |
| Embodiment 67 | 2 | 5 | 0.4 | 1 | 0.2 | / | / | 501 | 62 | 23 | 11 | 13 | 8 |
| Embodiment 68 | 2 | 5 | 0.4 | 2 | 0.4 | / | / | 563 | 71 | 13 | 9 | 12 | 9 |

(continued)

| | Mass percent c of FEC (%) | $D_{v50}$ diameter f of positive active material (μm) | c/f×100 | Mass percent e of sultone compound (1,3-propane sultone) (%) | e/f×100 | Masspercent g of the compound (1-4) represented by Formula (I) (%) | g/f×100 | Number of cycles at 45 °C (cls) | Calendar life (cls) | ITC thickness expansion rate | Thickness expansion rate after 90-day storage at 60 °C (%) | Floating charge thickness expansion rate (%) | Overcharge test (pcs) |
|---|---|---|---|---|---|---|---|---|---|---|---|---|---|
| Embodiment 69 | 2 | 5 | 0.4 | 4 | 0.8 | / | / | 601 | 77 | 9 | 6 | 10 | 10 |
| Embodiment 70 | 2 | 5 | 0.4 | 5 | 1 | / | / | 600 | 78 | 9 | 6 | 8 | 10 |
| Embodiment 71 | 2 | 6.25 | 0.32 | 0.5 | 0.08 | / | / | 478 | 55 | 21 | 22 | 31 | 5 |
| Embodiment 72 | 2 | 1 | 2 | / | / | 1 | 1 | 392 | 59 | 18 | 15 | 24 | 3 |
| Embodiment 73 | 2 | 3 | 0.67 | / | / | 1 | 0.33 | 467 | 63 | 22 | 13 | 25 | 7 |
| Embodiment 74 | 2 | 6 | 0.33 | / | / | 1 | 0.17 | 612 | 74 | 10 | 7 | 10 | 9 |
| Embodiment 75 | 2 | 6 | 0.33 | / | / | 0.1 | 0.02 | 528 | 57 | 15 | 18 | 47 | 4 |

Note: "/" in Table 6 indicates that the corresponding preparation parameter does not exist.

As can be seen from Embodiments 1 to 12 versus Comparative Embodiments 1 to 3 in Table 1, by controlling the mass percent of the PC, the value of the a/b ratio, and the mass percent of the FEC to fall within the range specified in this application, the obtained electrochemical device is excellent in both cycle performance and high-temperature storage performance.

As can be seen from Embodiments 13 to 19 in Table 2, when the electrolytic solution includes the chain carbonate described in this application, by controlling the mass percent d of the chain carbonate and/or the value of the aid ratio to fall within the range specified in this application, the obtained electrochemical device is excellent in cycle performance, high-temperature storage performance, floating charge performance, and safety performance.

The additives in the electrolytic solution usually affect the performance of the electrochemical device. In the electrochemical device according to this application, the sultone compound, the additive A, the additive B, and the compound represented by Formula (I) are optionally added into the electrolytic solution, thereby improving the cycle performance, high-temperature storage performance, floating charge performance, and safety performance of the electrochemical device to varying degrees.

As can be seen from Embodiment 2 and Embodiments 20 to 30 in Table 3, when the electrolytic solution includes the sultone compound described in this application, the electrolytic solution can further improve the cycle performance, high-temperature storage performance, floating charge performance, and safety performance of the electrochemical device. As can be seen from Embodiments 20 to 30, by controlling the mass percent of the sultone compound to fall within the range specified in this application, the obtained electrochemical device is excellent in cycle performance, high-temperature storage performance, floating charge performance, and safety performance.

As can be seen from Embodiment 2 and Embodiments 31 to 53 in Table 4, when the electrolytic solution includes the additive A and/or the additive B, the electrolytic solution can further improve the cycle performance, high-temperature storage performance, calendar life, floating charge performance, and safety performance of the electrochemical device.

As can be seen from Embodiment 2 and Embodiments 54 to 59 in Table 5, when the electrolytic solution includes the compound represented by Formula (I) and the mass percent of the compound falls within the range specified in this application, the electrolytic solution can further improve the cycle performance, calendar life, high-temperature storage performance, floating charge performance, and safety performance of the electrochemical device.

The mass percent c of the FEC, the particle diameter f of the positive active material, the mass percent e of the sultone compound (1,3-propane sultone), and the mass percent g of the compound represented by Formula (I) usually also affect the comprehensive performance such as cycle performance, high-temperature storage performance, floating charge performance, and safety performance of the electrochemical device. As can be seen from Embodiments 60 to 75 in Table 6, by controlling the relations between f and c, e, and g to fall within the range specified in this application, the obtained electrochemical device is excellent in cycle performance, high-temperature storage performance, calendar life, floating charge performance, and safety performance.

What is described above is merely exemplary embodiments of this application, but is not intended to limit this application. Any modifications, equivalent substitutions, and improvements made without departing from the spirit and principles of this application still fall within the protection scope of this application.

## Claims

1. An electrolytic solution, comprising ethylene carbonate, propylene carbonate, and fluoroethylene carbonate, wherein, based on a mass of the electrolytic solution, a mass percent of the ethylene carbonate is a, a mass percent b of the propylene carbonate is 12% to 35%, a mass percent c of the fluoroethylene carbonate is 0.2% to 2.5%, and the electrolytic solution satisfies $0.1 \leq a/b \leq 0.75$.

2. The electrolytic solution according to claim 1, wherein $1.0\% \leq a \leq 20\%$.

3. The electrolytic solution according to claim 1, further comprising a chain carbonate, wherein, based on the mass of the electrolytic solution, a mass percent of the chain carbonate is d; the chain carbonate comprises at least one of dimethyl carbonate, ethyl methyl carbonate, methyl propyl carbonate, methyl isopropyl carbonate, methyl butyl carbonate, diethyl carbonate, dipropyl carbonate, or dibutyl carbonate; and the electrolytic solution satisfies $0.04 \leq a/d \leq 0.35$ and/or $30\% \leq d \leq 60\%$.

4. The electrolytic solution according to claim 1, further comprising a sultone compound, wherein the sultone compound comprises at least one of 1,3-propane sultone, 2,4-butane sultone, or 1,4-butane sultone, and, based on the mass of the electrolytic solution, a mass percent e of the sultone compound is 0.5% to 5%, and c is less than or equal to e.

**5.** The electrolytic solution according to claim 1, further comprising an additive A, wherein the additive A comprises at least one of vinylene carbonate, vinyl ethylene carbonate, ethylene sulfate, lithium difluorophosphate, or a lithium borate salt.

**6.** The electrolytic solution according to claim 5, wherein the electrolytic solution satisfies at least one of the following relations:

(a) the additive A comprises vinylene carbonate, and, based on the mass of the electrolytic solution, a mass percent A1 of the vinylene carbonate is 0.01% to 2%;
(b) the additive A comprises ethylene sulfate, and, based on the mass of the electrolytic solution, a mass percent A2 of the ethylene sulfate is 0.01% to 2%;
(c) the additive A comprises a lithium borate salt, the lithium borate salt comprises at least one of lithium tetrafluoroborate, lithium diflu or o(oxalato)b orate, or lithium bis(oxalato)borate, and, based on the mass of the electrolytic solution, a mass percent A3 of the lithium borate salt is 0.01% to 2%;
(d) the electrolytic solution comprises vinylene carbonate and ethylene sulfate, and, based on the mass of the electrolytic solution, the mass percent of the vinylene carbonate is A1, the mass percent of the ethylene sulfate is A2, and the electrolytic solution satisfies $0.1 < A2/A1 \leq 12$;
(e) the electrolytic solution comprises vinylene carbonate and ethylene sulfate, and, based on the mass of the electrolytic solution, the mass percent of the vinylene carbonate is A1, the mass percent of the ethylene sulfate is A2, and the electrolytic solution satisfies $0.02\% \leq A1 + A2 \leq 3\%$;
(f) the electrolytic solution comprises vinylene carbonate and a lithium borate salt, and, based on the mass of the electrolytic solution, the mass percent of the vinylene carbonate is A1, the mass percent of the lithium borate salt is A3, and the electrolytic solution satisfies $0.01\% \leq A1 + A3 \leq 3\%$; and
(g) the electrolytic solution comprises vinylene carbonate and a lithium borate salt, and, based on the mass of the electrolytic solution, the mass percent of the vinylene carbonate is A1, the mass percent of the lithium borate salt is A3, and the electrolytic solution satisfies $0.1 \leq A1/A3 \leq 10$.

**7.** The electrolytic solution according to claim 1, wherein the electrolytic solution further comprises an additive B, and, based on the mass of the electrolytic solution, a mass percent of the additive B is 0.5% to 4%, and the additive B comprises at least one of succinonitrile, adiponitrile, 1,4-dicyano-2-butene, ethylene glycol bis(propionitrile)ether, 1,3,6-hexane tricarbonitrile, or 1,2,3-tris(2-cyanooxy)propane.

**8.** The electrolytic solution according to claim 1, wherein the electrolytic solution further comprises a compound represented by Formula (I), and, based on the mass of the electrolytic solution, a mass percent g of the compound represented by Formula (I) is 0.01% to 2%:

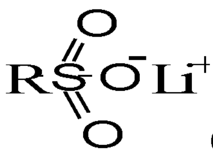
(I)

wherein, R is selected from unsubstituted or Ra-substituted $C_1$ to $C_8$ fluoroalkyls, unsubstituted or Ra-substituted $C_2$ to $C_{10}$ fluoroalkenyl, or unsubstituted or Ra-substituted $C_6$ to $C_{10}$ fluoroaryl; and
a substituent Ra of each group independently comprises at least one of a cyano group, a carboxyl group, or a sulfate group.

**9.** The electrolytic solution according to claim 1, wherein the electrolytic solution further comprises at least one of compounds represented by Formula I-1 to Formula I-9:

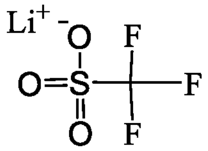
I-1

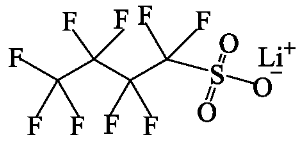
I-2

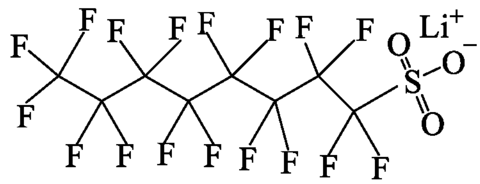
I-3

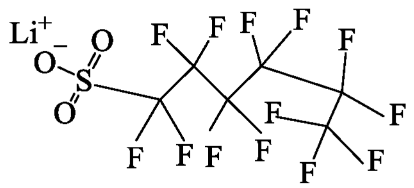
I-4

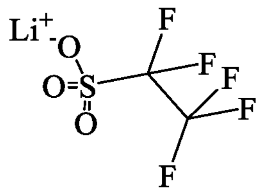
I-5

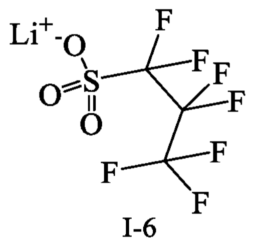
I-6

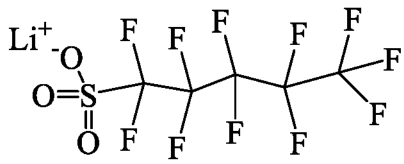
I-7

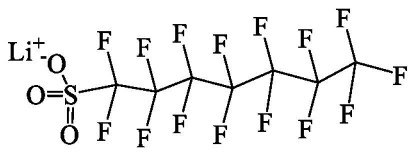
I-8

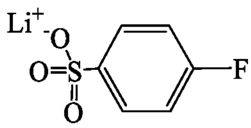
I-9

**10.** An electrochemical device, wherein the electrochemical device comprises the electrolytic solution according to any one of claims 1 to 9.

**11.** The electrochemical device according to claim 10, wherein the electrochemical device further comprises a positive electrode plate, the positive electrode plate comprises a positive material layer, the positive material layer comprises a positive active material, and a particle diameter of the positive active material satisfies 0.4 $\mu$m $\leq D_{v50} \leq$ 20 $\mu$m, and 2 $\mu$m $\leq D_{v90}$ <_ 40 $\mu$m.

**12.** The electrochemical device according to claim 11, wherein the $D_{v50}$ of the positive active material is f $\mu$m, and the electrochemical device satisfies at least one of conditions (i) to (iii):

(i)

$$0.05 \leq c / f \times 100 \leq 1;$$

(ii) the electrolytic solution comprises a sultone compound, and, based on a mass of the electrolytic solution, a mass percent of the sultone compound is e, and satisfies $0.08 \leq e/f \times 100 \leq 3$; and
(iii) the electrolytic solution comprises a compound represented by Formula (I), and, based on the mass of the electrolytic solution, a mass percent of the compound represented by Formula (I) is g, and satisfies $0.02 \leq g/f \times 100 \leq 1$.

**13.** The electrochemical device according to claim 11, wherein the positive active material comprises element M, the element M comprises at least one of Al, Mg, Ti, Cr, B, Fe, Zr, Y, Na, W, F, or S, and, based on a mass of metal elements except lithium in the positive active material, a mass percent of the element M is less than or equal to 0.5%.

**14.** An electronic device, wherein the electronic device comprises the electrochemical device according to any one of claims 10 to 13.

**INTERNATIONAL SEARCH REPORT**

International application No.
**PCT/CN2022/117004**

**A. CLASSIFICATION OF SUBJECT MATTER**

H01M 10/0567(2010.01)i； H01M 10/0525(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNPAT; WPI; EPODOC; CNKI: 锂, 电池, 电解液, 添加剂, EC, 碳酸乙烯酯, 碳酸亚乙酯, PC, 碳酸丙烯酯, 碳酸亚丙酯, FEC, 氟代碳酸乙烯酯, 氟代碳酸亚乙酯, 磺酸内酯, 磺内酯, VC, 碳酸亚乙烯酯, DTD, 硫酸亚乙酯, 磺酸锂, lithium, battery, electrolyte, additive, ethylene, carbonate, propylene, fluoroethylene, vinylene, sulfate, sulfonate

**C. DOCUMENTS CONSIDERED TO BE RELEVANT**

| Category* | Citation of document, with indication, where appropriate, of the relevant passages | Relevant to claim No. |
|---|---|---|
| PX | CN 113809399 A (NINGDE AMPEREX TECHNOLOGY LTD.) 17 December 2021 (2021-12-17)<br>claims 1-14 | 1-14 |
| X | CN 113206296 A (NINGDE AMPEREX TECHNOLOGY LTD.) 03 August 2021 (2021-08-03)<br>description, paragraphs 3-147 | 1-7, 10-14 |
| Y | CN 113206296 A (NINGDE AMPEREX TECHNOLOGY LTD.) 03 August 2021 (2021-08-03)<br>description, paragraphs 3-147 | 6, 8, 9 |
| Y | CN 105098244 A (NINGDE AMPEREX TECHNOLOGY LTD.) 25 November 2015 (2015-11-25)<br>description, paragraphs 10-70 | 6 |
| Y | CN 111740163 A (SHANSHAN ADVANCED MATERIALS (QUZHOU) CO., LTD.) 02 October 2020 (2020-10-02)<br>description, paragraphs 7-30 | 8-9 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **11 November 2022** | **28 November 2022** |
| Name and mailing address of the ISA/CN<br>**China National Intellectual Property Administration (ISA/CN)**<br>**No. 6, Xitucheng Road, Jimenqiao, Haidian District, Beijing 100088, China**<br>Facsimile No. **(86-10)62019451** | Authorized officer<br><br>Telephone No. |

Form PCT/ISA/210 (second sheet) (January 2015)

INTERNATIONAL SEARCH REPORT

International application No.
**PCT/CN2022/117004**

**C. DOCUMENTS CONSIDERED TO BE RELEVANT**

| Category* | Citation of document, with indication, where appropriate, of the relevant passages | Relevant to claim No. |
|---|---|---|
| A | CN 112582676 A (NINGDE AMPEREX TECHNOLOGY LTD.) 30 March 2021 (2021-03-30) entire document | 1-14 |
| A | CN 105826600 A (DONGUAN KAIXIN BATTERY MATERIAL CO., LTD.) 03 August 2016 (2016-08-03) entire document | 1-14 |
| A | US 2011052996 A1 (TDK CORP.) 03 March 2011 (2011-03-03) entire document | 1-14 |

Form PCT/ISA/210 (second sheet) (January 2015)

**INTERNATIONAL SEARCH REPORT**
**Information on patent family members**

International application No.
**PCT/CN2022/117004**

| Patent document cited in search report | | | Publication date (day/month/year) | Patent family member(s) | | | Publication date (day/month/year) |
|---|---|---|---|---|---|---|---|
| CN | 113809399 | A | 17 December 2021 | None | | | |
| CN | 113206296 | A | 03 August 2021 | None | | | |
| CN | 105098244 | A | 25 November 2015 | US | 2017040639 | A1 | 09 February 2017 |
| CN | 111740163 | A | 02 October 2020 | None | | | |
| CN | 112582676 | A | 30 March 2021 | None | | | |
| CN | 105826600 | A | 03 August 2016 | None | | | |
| US | 2011052996 | A1 | 03 March 2011 | JP | 2011049114 | A | 10 March 2011 |
| | | | | CN | 102005606 | A | 06 April 2011 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202111087759